# EUROPEAN PATENT SPECIFICATION

(11) **EP 4 280 294 B1**
(45) Date of publication and mention of the grant of the patent: **28.10.2026**
(21) Application number: 22174204.2
(22) Date of filing: 19.05.2022
(51) Int. Cl.: H01M 4/04, H01M 10/04

(54) **METHOD AND SYSTEM FOR DRYING A BATTERY PART**
VERFAHREN UND SYSTEM ZUM TROCKNEN EINES BATTERIETEILS
PROCÉDÉ ET SYSTÈME DE SÉCHAGE D'UNE PIÈCE DE BATTERIE

(43) Date of publication of application: 22.11.2023
(73) Proprietor: LG ENERGY SOLUTION, LTD., Seoul 07335 (KR)
(72) Inventor: MOON, Ta ll, 34122 Daejeon (KR); JEONG, Myeong Kang, 34122 Daejeon (KR); KONG, Sun Bae, 34122 Daejeon (KR)
(74) Representative: Goddar, Heinz J.

(56) References cited:
- CN-A- 102 607 240
- JP-A- 2004 319 117
- JP-B2- 5 392 332

## Description

### TECHNICAL FIELD

The present invention relates to a battery manufacturing method and a battery manufacturing system, see claims 1 and 7. In particular, the present invention relates to a drying process of a battery part as a part of a battery manufacturing method and system. The battery may be or include a secondary battery.

### BACKGROUND

It may be necessary or advantageous to dry a particular semi-finished battery part during the manufacturing process of a battery. A drying process may involve conducting a drying agent along the surface of the battery part such that the drying agent carries humidity away.

In view of this, a technical problem may be properly conditioning, i.e., controlling one or more ambient parameters such as humidity and/or temperature of, the drying agent that is used for drying a battery part. A further technical problem may be preventing defects, such as additive migration or occurrence of cracks, in a battery product, thus increasing a product quality of a battery. A further technical problem may be improving and optimizing a battery manufacturing method and system, particularly in terms of drying a battery part.

The document CN 102607 240 A relates to a lithium ion battery pole piece drying method and apparatus in which solvent vapour is introduced into a drying chamber to control evaporation rate.

The document JP 5 392332 B2 (describing the preamble of claims 1 and 7) relates to a drying apparatus in which normal-pressure superheated steam generated by electromagnetic induction heating is supplied to a drying chamber for drying a coated electrode at a temperature below the solvent boiling point.

### SUMMARY OF INVENTION

At least one of the above technical problem solved by the subject matter of the independent claims 1 and 7. Particular embodiments are given by the features of the dependent claims.

The battery manufacturing method as disclosed herein may be carried out using the battery manufacturing system. The battery manufacturing system as disclosed herein may be configured to carry out the battery manufacturing method as disclosed herein. In the following, the battery manufacturing method and the battery manufacturing system are described in combination for the sake of brevity of the description. However, the battery manufacturing method and the battery manufacturing system are generally independent from each other.

A battery includes generally or is any of a primary battery, a secondary battery or more generally an electrochemical cell for energy storage, unless indicated otherwise or technically inappropriate. In particular, the battery as used herein may refer to a secondary battery, i.e., a rechargeable battery. For example, the battery may comprise one or more layers of electrodes and one or more layers of separators stacked in a specific manner. The battery may be a coin-type, cylindrical, prismatic, or pouch-type battery. Particularly, the battery may be configured to provide power to an electric vehicle. Hereinafter, a reference will be made to "a" battery, in order not to limit the subject matter to the manufacture of one particular battery.

The manufacturing of a battery involves drying of a battery part. The battery part as used herein may refer to any semi-finished part of a battery that may be used to manufacture a battery product. In a specific example, the battery part may refer to an electrode substrate and an active material disposed thereon. For example, the active material may be deposited and/or sprayed on the electrode substrate. The electrode substrate may be a metal foil comprising a metallic material, such as copper, nickel, or aluminum.

The active material of a battery may be provided as a viscous mixture which may be referred to as a "slurry". The slurry containing the active material may be disposed on an electrode substrate, thus obtaining a battery part. The battery part may be dried, and activated optionally, to obtain an electrode for a battery, particularly for a secondary battery.

The slurry may comprise a binder to which a solid active material is admixed. The binder may be a polymeric binder. Examples for an active material are Lithium-Cobalt-Oxide (LCO), Lithium Nickel Cobalt Manganese Oxide (NCM), Lithium Nickel Cobalt Aluminum Oxide (NCA), Lithium Manganese Oxide (LMO), Lithium Nickel Manganese Spinel (LNMO), Lithium Iron Phosphate (LFP). An active material for an electrode may also include graphite, lithium, or silicon. The slurry may additionally comprise solid components, particularly solid conductive particles such as carbon black or carbon nanotubes. The slurry may additionally contain dispersants. The (polymeric) binder may include polyvinylidene fluoride (PVDF), polymethyl acrylate (PMMA), carboxymethylcellulose (CMC), polyacrylate, xanthan gum, polyethylene glycol, or styrene butadiene. The slurry may further contain a liquid component. The liquid component may include water or an organic solvent such as tetrahydrofuran (THF) or N-Methyl-2-pyrrolidon (NMP). A drying process may be performed to remove the liquid component of the battery part.

As such, the slurry may refer to a viscous mixture containing the active material. Furthermore, the battery part may refer to a semi-finished product including an electrode substrate and the slurry disposed thereon. For the sake of simplifying the description, the terms active material, slurry, and the battery part may be used interchangeably hereinafter, unless indicated otherwise or technically inappropriate.

The battery manufacturing method may comprise providing a battery part in a drying unit. The providing the battery part may include preparing and arranging the battery part in the drying unit. The arranging may include, for example, moving or transporting the battery part into the drying unit.

Correspondingly, the battery manufacturing system may comprise a drying unit, particularly the drying unit mentioned above. The drying unit as disclosed herein may be configured to accommodate the battery part. The drying unit may refer to a space in which the battery part is placed and dried. In particular, the drying unit may provide a space in which the drying agent is blown towards the battery part for drying. The drying may be performed using the drying agent, which may be conditioned and fed as specified below. The drying unit may be shaped and dimensioned accordingly, and may additionally comprise means to allow the drying agent to flow along the battery part. The drying unit may comprise any of the corresponding features described below, in particular in connection with the drawings.

The drying unit may be provided with one or more heating means that may include at least one of an oven, a hot air blower, a heat radiator, a heating plate, a heating coil, or any other heating device, or any combination of the foregoing. In particular, the battery manufacturing system may comprise multiple blowers and/or nozzles for blowing the drying agent towards the battery part in the drying unit. The multiple blowers and/or nozzles may be configured to blow the drying agent towards the battery part in the drying unit from multiple directions.

The battery part may be moved through the drying unit while the battery part is dried. For example, the battery part may be moved in a stop-and-go process or continuously moved. The battery part may be moved or transported, for example, by a motorized stage, a conveyer unit and/or in a roll-to-roll process. Accordingly, the battery manufacturing system may comprise a transport device to transport the battery part through the drying unit. The transport device may be configured to transport the battery part in the above described manner.

The battery manufacturing method may comprise providing a drying agent in a mixing unit. Correspondingly, the battery manufacturing system may comprise a mixing unit configured to condition a drying agent.

The drying agent as disclosed herein may refer to a fluid, i.e., a gas that may contain a liquid, that is fed to the drying unit and/or the mixing unit. The drying agent may be or include a fluid that is present in the mixing unit before initiating and/or while performing the battery manufacturing method. Alternatively or additionally, the drying agent may be or include a fluid that is received in the mixing unit before initiating and/or while performing the battery manufacturing method. The drying agent may be used to carry (away) vapor from the active material in the drying unit. Hereinafter, the term vapor is used in a simplifying manner to collectively indicate a vaporized liquid in gaseous state and, if applicable, liquid droplets that are carried by the drying agent, unless indicated otherwise or technically inappropriate. In particular, the vapor may include a gaseous phase of any liquid component that evaporate from the battery part.

The drying agent may comprise a gas, for example air and/or any process gas (e.g., an inert gas or gaseous nitrogen of any purity, such as N2.0, N3.0, N4.0, N5.0, N6.0, N7.0, etc.). The air and/or process gas may be referred to as a carrier fluid of the drying agent. The drying agent may have a humidity above zero, i.e., may have some content of water vapor. The humidity may arise from vaporized liquid (i.e., in gaseous state, which may be referred to as vapor) and/or liquid droplets (i.e., liquid phase mixed in the carrier gas of the drying agent, which may be referred to as steam). As mentioned above, such liquid droplets are subsumed under vapor herein for simplicity, unless technically inappropriate.

Herein, the humidity of the drying agent may be controlled to be, in absolute humidity, between 5 g/kg and 90 g/kg, particularly between 10 g/kg and 80 g/kg, and more particularly between 20 g/kg and 60 g/kg, wherein the unit g/kg may indicate water vapor per mass of dry air. The absolute humidity may be measured by using a conventional hygrometer, such as a capacity humidity sensor, a resistive hygrometer, a thermal hygrometer, a gravimetric hygrometer or an optical hygrometer. Furthermore, the absolute humidity may be determined by first measuring a relative value of the humidity and calculating the absolute humidity from the relative value according to the teachings from the hygrometry.

Additionally or alternatively, the temperature of the drying agent may be controlled to be between 25°C and 400°C, particularly between 50°C and 300°C, or between 60°C and 250°C, and more particularly between 80°C and 200°C. As described herein, the temperature of the drying agent in the drying unit may be higher than in or at the mixing unit, resulting in a temperature difference of 1°C to 200°C, or 5°C to 100°C, or particularly 20°C to 80°C.

The mixing unit may be (functionally and/or operably) configured to condition the drying agent. The term conditioning as used herein may refer to providing and/or maintaining a specific environment in terms of ambient parameters, which may include temperature and/or humidity. The mixing unit may be functionally configured to control the humidity and/or the temperature the drying agent. Herein, the drying agent that has been conditioned by the mixing unit may also referred to as a conditioned drying unit. The mixing unit may comprise any of the corresponding features as described below, in particular in connection with the drawings.

The humidity and/or temperature of the drying agent is controlled by and/or in the mixing unit. Accordingly, the mixing unit may provide a space in which the drying agent is conditioned. The mixing unit may provide a space to receive the drying agent and may operate to control the humidity of drying agent. For this purpose, the mixing unit may comprise a chamber, which may be also referred to as a mixing chamber, in which the drying agent is conditioned by the mixing unit, in particular by controlling the humidity and/or temperature of the drying agent. The mixing chamber may be fluidly connected to the drying unit in an airtight manner. In particular, the mixing chamber may be fluidly connected to the drying chamber (as described above) of the drying unit in an airtight manner. The chamber may be configured to provide and maintain a specific environment in terms of ambient parameters including temperature and/or humidity. If present, a port system (described below) and a humidifier may be fluidly connected to the mixing chamber of the mixing unit. The mixing chamber may comprise any of the corresponding features as described below, in particular in connection with the drawings.

More generally, the mixing unit may be arranged at any suitable position in the battery manufacturing system to provide a space in which the drying agent is conditioned. In particular, the mixing unit may be configured to condition the drying agent in a drying conduit (described below) that is fluidly connected to the drying unit. As such, the mixing unit may be operable to control the humidity and/or temperature of the drying agent in the drying conduit. For example, the drying conduit may be provided with a valve or a damper to enable an inflow of the external gas, and thus admixture to the drying agent, in a controlled manner, in order to condition the drying agent. In such examples, the mixing chamber as described above may be optional and may be present or omitted.

The battery manufacturing method comprises controlling humidity and/or temperature of the drying agent by the mixing unit. The expression controlling may generally refer to changing an ambient parameter towards a target range and/or maintaining the ambient parameter in or near the target range. The ambient parameter may include the temperature and/or humidity of the drying agent. Alternatively or additionally, controlling may refer to changing and/or maintaining one or more variables that may affect the ambient parameter. As described above, controlling the humidity and/or temperature of the drying agent may correspond to conditioning the same.

The humidity refers generally to an amount of water vapor in a fluid, particularly in the drying agent. The humidity may be determined as an absolute humidity in terms of mass per unit volume of a carrier gas (g/m³). Alternatively or additionally, the humidity may be determined as a relative humidity defined as ratio (given in %) of an actual mass of water vapor in the carrier gas (such as the drying agent) to a maximum possible mass. Alternatively or additionally, the humidity may be determined as a specific humidity in terms of mass of water vapor per unit mass of a carrying gas (g/kg). Alternatively or additionally, the humidity may be determined by a weight ratio in terms of mass of water vapor per unit mass of dry gas (carrier gas without water vapor) in units of g/kg.

The humidity depends generally on the temperature. For example, the capacity to carry water vapor of the drying agent, such as air, may increase as the temperature increases. However, a numerical humidity value may not be relevant for carrying out the invention. Instead, the invention relates to a drying process as part of a battery manufacturing process, in which a liquid component of the battery part evaporates and carried away by the drying agent. In particular, due to the material properties of the slurry as described above, the relative humidity in vicinity of the slurry may be over 80%, over 90% or over 95% or any other value between 80% and 100% at any processing temperature, particularly at 25°C or at any temperature between 10°C and 100°C, and at the atmospheric pressure (1.013 × 10⁵ Pa). The invention can be carried out as long as the drying agent has a humidity below and temperature suitable to carry away the evaporated liquid component from the battery part.

The humidity regularly refers to water vapor contained in a carrier gas. However, as indicated above, one or more vaporized liquid components of the battery part may also escape the battery part undergoing a drying process in addition to water vapor. Hence, the drying agent may carry away, in addition to water vapor, an amount of any vaporized liquid from the battery part in the drying unit. Such liquid component of the battery part may include, for example, a vaporized organic solvent of the battery part, such as THF or NMP.

The mixing unit may be configured to increase and/or decrease the humidity of the drying agent towards a target humidity range. Further, the mixing unit may be configured to maintain the humidity of the drying agent within the target humidity range. In particular, the mixing unit may be configured to control the variable, e.g., by incrementing, decrementing and/or maintaining the variable, that affects the humidity of the drying agent. The mixing unit may be configured to control the variable via a humidity control loop as described in detail below.

Similarly, the mixing unit may be configured to increase and/or decrease the temperature of the drying agent towards a target temperature range. Further, the mixing unit may be configured to maintain the humidity of the drying agent within the target temperature range. In particular, the mixing unit may be configured to control, e.g., increment, decrement and/or maintain, the variable that affects the temperature of the drying agent. The mixing unit may be configured to control the variable via a temperature control loop as described in detail below. In some examples, the humidity and the temperature of the drying agent may be controlled by the same variable.

The mixing unit may be configured to control one or more variables to condition the drying agent, in particular to control the humidity and/or temperature of the drying agent. The one or more variables may be or include, for example, an inflow of an external gas. The external gas may be, for example, air or a process gas as mentioned above. Additionally or alternatively, a valve state that governs the inflow of the external gas may be considered as the variable. The one or more variables may be or include an inflow of water vapor added to the drying agent, for example using a humidifier as aforementioned, in order to increase the humidity of the drying agent. The mixing unit may be configured to control the inflow of water vapor via a valve fluidly connected between the humidifier and the mixing unit. Additionally or alternatively, the one or more variables may be or include an operational status of the humidifier to generate the water vapor. For example, the one or more variables may be an ultrasonic frequency of an ultrasonic humidifier.

In addition, the one or more variables may be or include an operational status, such as a heating power, of a heater, an operational status, such as a cooling power, of cooling means.

The target humidity range may be individual for each battery part and may depend on the battery manufacturing method and system. In particular, the target humidity range may be determined by a material, thickness and temperature of the slurry, vapor pressure of its liquid component(s) and/or a material of its binder. In a specific example, the target humidity range may be in a range of 1 g/kg to 100 g/kg, or 5 g/kg to 80 g/kg, or 10 g/kg to 60 g/kg.

The target temperature range may be individual for each battery part and may depend on the battery manufacturing method and system. In particular, the target temperature range may be determined by a material, thickness and temperature of the slurry, vapor pressure of its liquid component(s) and/or a material of its binder. In a specific example, the target temperature range may be in a range of 5 °C to 400 °C, or 10 °C to 300 °C, or 20 °C to 200 °C.

The battery manufacturing method comprises feeding the drying agent from the mixing unit to the drying unit. Correspondingly, the battery manufacturing system comprises a flow generator which is configured to move the drying agent from the mixing unit to the drying unit for drying the battery part. Accordingly, the drying agent may be fed from the mixing unit to the drying unit by the flow generator. The feeding may result in that the drying agent flows from the mixing unit to the drying unit. The feeding may also be referred to as moving the drying agent.

The flow generator may be configured to generate a pressure gradient, thereby inducing a flow of the drying agent. The flow generator may be fluidly connected to the mixing unit and the drying unit. The battery manufacturing system may comprise conduits, channels, tubes, air locks or the like (which will be collectively referred to herein as conduits for the sake of brevity) so as to provide a fluid connection between the mixing unit, the drying unit and the flow generator. In particular, the battery manufacturing system may establish a closed cycle of the drying agent fluidly connected any of the mixing unit, drying unit and the flow generator. The flow generator may be or include one or more ventilators, impellers, fans, blowers, pumps or the like, or any combination thereof.

The battery manufacturing method and system disclosed herein (and/or the flow generator) may be configured to generate a flow of the drying agent with a mass flow rate of 1 · 10⁴ m³/h to 1· 10⁵ m³/h, or 2 · 10⁴ m³/h to 8 · 10⁴ m³/h, or particularly 3 · 10⁴ m³/h to 6 · 10⁴ m³/h. The mass flow rate of the drying agent may depend on flow cross sections of the drying agent in different areas of the battery manufacturing system, the material of the drying agent and/or on an operational power of the flow generator.

In the battery manufacturing method and system disclosed herein, the mixing unit and the drying unit may be fluidly connected to each other in an airtight manner so as to prevent a passage of any fluid other than the drying agent and the external gas introduced via the port system as described herein if applicable.

The drying agent may be used to dry the battery part provided in the drying unit. As described above, the drying agent may be blown towards the battery pat in the drying unit for drying the same. The drying process of the battery part may influence a quality of a battery product. Specifically, it may be advantageous that such liquid component from the active material is removed by a drying process. The drying process of the active material may increase a structural quality of an electrode and thus also increase the quality of a battery product. Specifically, the drying process may affect the morphology of a resulting active material of the electrode, thereby affecting the performance of the electrode. For example, the drying process may increase or decrease a homogeneity of the active material, which may affect the performance of the electrode of the battery. Furthermore, the drying process may affect binder distribution or an occurrence of a crack in the active material. In view of this, it may be advantageous to properly conditioning a drying agent that is used in a drying process of a battery part, in order to increase the quality of a battery product.

The battery part, in particular the slurry, may have a high humidity due to the liquid component(s). If, however, such battery part is dried using a drying agent with an excessively low humidity, the battery, or its slurry, may dry too fast. This may increase the risk of occurrence of a crack in the battery part. In view of this, the battery manufacturing method and system disclosed herein provides for a precise control over the drying process of the battery part. Accordingly, the occurrence of defects in the battery part, such as cracks in the active material of an electrode of a battery product may be decreased, thereby increasing a quality of a battery product.

The battery manufacturing method may comprise introducing water vapor directly into the mixing unit. This process may be referred to as pre-humidification of the drying agent. The pre-humidified drying agent may be fed from the mixing unit to the drying unit, carried by the drying agent. The introducing water vapor directly into the mixing unit, thus pre-humidifying the drying agent, may be advantageous particularly when starting (or re-starting after an interruption) the battery manufacturing method and/or operation of the battery manufacturing system, because the drying agent present in the mixing unit or the drying unit may be too dry for the battery part.

Correspondingly, the battery manufacturing system may comprise a humidifier as described above, or a pre-humidifier, that is fluidly connected to the mixing unit. The humidifier may be configured to introduce water vapor directly into the mixing unit, a process generally referred to as humidifying the drying agent. The humidifier or the pre-humidifier may be configured to generate water vapor, which may be carried by a carrier gas or the drying agent present. The water vapor from the humidifier or the pre-humidifier may be introduced directly into the mixing unit by means of a pressure gradient and/or diffusion.

The battery manufacturing method comprises re-directing the drying agent from the drying unit to the mixing unit to establish a circulation of the drying agent. In other words, the drying agent may be moved in a cycle (or a loop) that includes, or passes through, the mixing unit and the drying unit. In particular, the corresponding battery manufacturing system may comprise a drying conduit for the flow of the drying agent from the mixing unit to the drying unit, and a return conduit for the flow of the drying agent from the drying unit back to the mixing unit. The drying conduit and the return conduit may be fluidly connected to each other in a direct manner or in an indirect manner. Here, being fluidly connected in an indirect manner may indicate that at least one other element, for example the mixing unit, is fluidly connected between the drying conduit and the return conduit. In particular, the drying conduit and the return conduit may be fluidlyconnected to each other in an indirect manner such that the drying agent cannot flow directly from the drying conduit to the return conduit without at least passing through at least one other element, such as the mixing unit.

The battery manufacturing system may be configured to control (e.g., any of enable, stop, increase or decrease) the drying flow by means of a valve. For example, the system (or the drying conduit) may comprise a valve (or a valve system comprising multiple valves), particularly a damper, to enable, stop, increase or decrease the drying flow of the drying agent from the mixing unit to the drying unit. For example, the valve or the damper may be installed in the drying conduit and/or between the drying conduit and the drying unit so as to enable, stop, increase and/or decrease the drying flow.

Additionally or alternatively, the battery manufacturing method may comprise controlling (e.g., any of enabling, stopping, increasing or decreasing) the return flow. The corresponding battery manufacturing system may be configured to control (e.g., any of enable, stop, increase or decrease) the return flow, particularly by means of one or more valves. For example, the battery manufacturing method may comprise using a valve (or multiple valves), including particularly a damper, to enable, stop, increase and/or decrease the return flow of the drying agent from the drying unit to the mixing unit. The corresponding battery manufacturing system (or the return conduit) may comprise a valve (or a valve system), particularly a damper, to enable, stop, increase or decrease the return flow of the drying agent from the drying unit to the mixing unit. For example, the valve or the damper may be installed in the return conduit and/or between the return conduit and the mixing unit so as to enable, stop, increase and/or decrease the return flow. The valve or the valve system to control the return flow may be also referred to as a return port as described below.

Furthermore, the battery manufacturing method may further comprise controlling a mixing ratio of the external gas and the drying agent of the return flow. The corresponding battery manufacturing system may be configured to control a mixing ratio of the external gas and the drying agent of the return flow. The mixing ratio may be used as a parameter or a variable to condition the drying agent, i.e., to control the humidity and/or the temperature of the drying agent. The mixing ratio may be controlled in and/or by the mixing unit. The mixing ratio may be controlled by controlling the return flow of the drying agent in the above-described manner, and/or by controlling the inflow of the external gas as described herein. In particular, any or both of the return flow of the drying agent and the inflow of the external gas may be controlled using a respective valve (or a respective valve system including multiple valves). The controlling of the mixing ratio may be as described below.

The flow generator is configured to generate any of the flow (also referred to herein as a return flow) of the drying agent from the drying unit to the mixing unit and the flow (also referred to as a drying flow) of the drying agent from the mixing unit to the drying unit.

In this respect, the drying unit may comprise a drying chamber. Alternatively or additionally, the mixing unit may comprise a mixing chamber. The mixing chamber may be fluidly connected to the drying chamber, particularly via the drying conduit and the return conduit as described above. The mixing chamber and the drying chamber may be fluidly connected to each other, particularly in an airtight manner, such that the drying agent may be moved in a cycle (or a loop). Accordingly, the flow generator may be configured to move the drying agent from the drying unit to the mixing unit in the cycle of the drying agent. The flow generator may be configured to establish a circulation of the drying agent through and between the drying chamber and the mixing chamber. Hence, the energy and cost efficiency of the battery manufacturing method and system may be increased.

In addition, the battery manufacturing system may comprise a heat exchanger configured to transfer heat between the drying agent flowing from the mixing unit to the drying unit and the drying agent flowing from the drying unit to the mixing unit. In other words, the heat exchanger may be configured to transfer heat between the drying conduit and the return conduit. The heat exchanger may provide a thermal coupling between the drying conduit and the return conduit. As such, the heat exchanger may be considered as a heater configured to heat the drying agent flowing from the mixing unit to the drying unit.

The corresponding battery manufacturing method may comprise thermally coupling the drying agent flowing from the mixing unit to the drying unit (i.e., drying flow) and the drying agent flowing from the drying unit to the mixing unit (i.e., return flow). As described above, the drying flow and the return flow, or the drying conduit and the return conduit, may be fluidly separate from each other, for example by means of the drying conduit and the return conduit.

As such, a temperature of the drying agent moving from the drying chamber to the mixing chamber (i.e., return flow) may be exploited, for example, to pre-heat the drying agent moving from the mixing chamber to the drying chamber (i.e., drying flow). Accordingly, heat form the return flow of the drying agent may be at least partially transferred to the drying flow. The energy efficiency of the battery manufacturing method and system may be increased in this manner.

The humidity and/or temperature of the drying agent are/is controlled by adding an external gas to the drying agent in the mixing unit. The external gas may refer to a gas from outside of the battery manufacturing system, or outside of the mixing unit, the drying unit, the flow generator and any conduits fluidly connecting the same. In particular, the external gas may be or include ambient air. The external gas or the ambient air may be at an atmospheric pressure (1.013 × 10⁵ Pa). The external gas or the ambient air may have a humidity and/or a temperature defined by local weather.

In a particular example, the mixing unit maybe be located on the outside of a building so that ambient air may be easily added to the drying agent. The drying unit may be outside or inside of the building.

The external gas may have a humidity that is different from the humidity of the drying agent. Adding the external gas to the drying agent may result in increase or decrease of the humidity of the drying agent. For example, if the humidity of the drying agent is excessively above a target humidify range, the external gas may be added to the drying agent to decrease the humidity of the drying agent. Similarly, if the humidity of the drying agent is excessively below the target humidify range, the external gas may be added to the drying agent to increase the humidity of the drying agent.

Additionally or alternatively, the external gas may have a temperature different from the temperature of the drying agent. Adding the external gas to the drying agent may result in increase or decrease of the temperature of the drying agent. For example, if the temperature of the drying agent is excessively above a target temperature range, the external gas may be added to the drying agent to decrease the temperature of the drying agent. Similarly, if the temperature of the drying agent is excessively below the target temperature range, the external gas may be added to the drying agent to increase the temperature of the drying agent.

Furthermore, an inflow of the eternal gas to the mixing unit may be controlled. For example, the inflow of external gas may be controlled via a humidity control loop for controlling or regulating the humidity of the drying agent, and more specifically, for controlling or regulating of the humidity of the drying agent in the cycle or circulation loop of the drying agent. The inflow of external gas may be controlled by setting a valve state, for example, closed, open, or partially open (changeable in increments or in a continuous manner). Additionally or alternatively, the inflow of external gas may be controlled by controlling the power of a flow generator.

Additionally or alternatively, the inflow of external gas may be controlled via a temperature control loop for controlling or regulating the temperature of the drying agent, and more specifically, for controlling the temperature of the drying agent in the cycle of the drying agent. Any of the humidity control loop and the temperature control loop may be configured and/or comprise any of the respective features as described below.

The return flow of the drying agent and/or the inflow of the external gas may be controlled via the humidity control loop and/or the temperature control loop in order to control the mixing ratio of the drying agent (from the return flow) and the external gas. For example, the mixing ratio of the drying agent (from the return flow) and the external gas may refer to, or be determined by, a mass flow rate of the inflow of the external gas in relation to a mass flow rate of the drying agent of the return flow, or an inverse value thereof. Additionally or alternatively, the mixing ratio may be determined by an operating state (i.e., a flow cross section) of a valve for controlling the return flow of the drying agent in relation to an operation state (i.e., a flow cross section) of a valve for controlling the inflow of the external gas.

Controlling the inflow of the external gas may enable control over the humidity and/or temperature of the drying agent in the mixing unit. Feeding the drying agent which has been conditioned by adding the external gas to the drying unit may allow for controlling the drying process of the battery part in the drying unit. Accordingly, the quality of a battery product may be increased.

The corresponding battery manufacturing system may comprise a port system configured to enable, particularly to control, an inflow of the external gas to be added to the drying agent, in order to condition the drying agent. More specifically, the port system may be operable by the mixing unit to condition the drying agent. The port system may comprise an aperture (and/or a feedthrough) and a valve to enable, disable and/or control the inflow of the external gas to be added to the drying agent.

The port system may comprise an aperture, a feedthrough, and/or a conduit to allow the external gas into the mixing unit. The port system may comprise an inlet port to intake the external gas. The inlet port may comprise a valve, particularly a damper, that is operable in a selected one of different valve states. The different valve states may include being closed, being opened, and one or more intermediate states therebetween. The valve state may be selected in order to increase or decrease the inflow of the external gas. Additionally or alternatively, the inlet port may comprise means to generate or promote a flow of the external gas into the mixing unit.

In particular, the port system may comprise a return port at the return conduit, for example in the return conduit or between the return conduit and the mixing unit, configured to control the return flow of the drying agent. The return port may comprise a valve, particularly a damper, that is operable in a selected one of different valve states, which may include a fully open state, a closed state and one or more continuous intermediate states. The return port or the inlet port, or both in combination, may be operable to control a mixing ratio of the external gas and the drying agent. The return port may be operated in order to increase or decrease the return flow of the drying agent. Alternatively or additionally, the inlet port may be operated in order to increase or decrease the inflow of the external gas to the mixing unit. The mixing ratio of the drying agent and the external gas may be controlled in this manner.

In addition, the port system may also be configured to exhaust a part of the drying agent, particularly in response to adding the external gas. The corresponding battery manufacturing method may comprise exhausting a part of the drying agent in response to the adding the external gas. Accordingly, it may be prevented that an overpressure occurs in the battery manufacturing system, or in any of the mixing unit, the drying unit and any of the conduits fluidly connected thereto. Accordingly, the port system may comprise an exhaust port for exhausting a part of the drying agent. The exhaustion of the removed pat of the drying agent may be passive in response to the inflow of the external gas, in particular due to a pressure-activated release. For example, the port system may comprise a pressure relief valve. Additionally or alternatively, the exhaustion port may comprise a valve that is actively controlled to exhaust a part of the drying agent, or to change an outflow amount of the drying agent from the battery manufacturing system.

The battery manufacturing method may comprise exhausting the drying agent, which may also be referred to as removing a part of the drying agent. In particular, a part of the drying agent may be removed or withdrawn from the cycle or circulation loop of the drying agent (the drying agent flowing in and between the mixing unit and the drying unit). More specifically, a part of the drying agent may be removed from the return flow of the drying agent that flows from the drying unit to the mixing unit. The outflow of the (removed or exhausted) drying agent may be passively and/or actively controlled. More specifically, the outflow of drying agent may be passively controlled by pressure-activated release, for example, by a pressure relief valve. Additionally or alternatively, the outflow of drying agent may be actively controlled by active opening or closing of a valve or damper, in particular as a function of the humidity and/or temperature of the drying agent.

The battery manufacturing method may further comprise determining, and particularly monitoring, the humidity of the drying agent. The humidity of the drying agent may be determined at or in the mixing unit, the drying flow of drying agent (i.e., flowing from the mixing unit to the drying unit), the drying unit and/or the return flow of drying agent (i.e., flowing from the drying unit to the mixing unit). In particular, the humidity of the drying agent may be determined while the drying agent is moved from the mixing unit to the drying zone. Herein, the expression determining may be or include measuring and/or calculating, unless indicated otherwise or technically inappropriate. The expression monitoring may be or include determining continuously or repeatedly over a time period, unless indicated otherwise or technically inappropriate. The monitoring may be carried out in a time dependent manner.

The corresponding battery manufacturing system may comprise a humidity sensor configured to determine the humidity of the drying agent. The humidity sensor may be arranged in or at the mixing unit, the drying unit, and/or any conduit fluidly connecting the mixing unit and the drying unit. In particular, the humidity sensor may be arranged such to determine the humidity of the drying agent moving from the mixing unit to the drying unit. The humidity sensor may be configured to determine (or measure) the relative and/or absolute humidity. The humidity sensor may be a hygrometer. A suitable example may be a dew point hygrometer or thermal hygrometer.

Determining the humidity may involve measuring and/or calculating. For example, the absolute humidity of the drying agent may be calculated by dividing the mass of water contained in the gas by the volume occupied by the quantity of the gas concerned. Additionally or alternatively, the relative humidity may be measured and converted to the absolute humidity. For example, relative humidity may be measured as a potential difference generated by heating moist gas inside a sensor. As mentioned above, the humidity as referred to herein may be or include any of the relative humidity and the absolute humidity.

The determined humidity and/or the determined temperature (described below) may be used for controlling the humidity and/or temperature of the drying agent. In particular, the determined humidity may be used to control the addition of the external gas to the drying agent in the mixing unit. In particular, the inflow of the external gas may be changed as a function of the determined humidity. Additionally or alternatively, the humidifying power of the humidifier may be changed as a function of the determined humidity. Additionally or alternatively, the determined humidity may be used to control the power of a humidifier (that humidifies the drying agent) as a function of the determined humidity (for example, by changing a frequency of an ultrasonic humidifier).

In addition or alternatively, the battery manufacturing method may comprise determining, particularly monitoring, a humidity of the external gas. The corresponding battery manufacturing system may comprise an additional humidity sensor configured to determine the humidity of the external gas. For example, the additional humidity sensor may be arranged on the outside of the mixing unit and the drying unit. For example, the additional humidity sensor may be arranged at or in the port system, particularly in or at the inlet port. The determined humidity of the external gas may be taken into account for controlling the humidity (and/or temperature) of the drying agent, particularly by controlling the inflow of the external gas accordingly.

The determined humidity may be used for controlling the humidity of the drying agent via a humidity control loop. For example, in the humidity control loop, the inflow of the external gas may be increased, decreased or maintained, as a function of the determined humidity of the drying agent. If the humidity of the drying agent is outside a target humidity range, the inflow of external may be decreased or increased, depending on the humidity of the drying agent and/or the humidity of the external gas. Alternatively or additionally, the operational status of the humidifier that may humidify the drying agent may be controlled accordingly. In this manner, the mixing unit may be configured to automatically control the humidity of the drying agent via the humidity control loop.

The battery manufacturing method may further comprise determining, and particularly monitoring, the temperature of the drying agent. The temperature of the drying agent may be determined at or in the mixing unit, in the drying flow of drying agent (i.e., flowing from the mixing unit to the drying unit), in the drying unit and/or in the return flow of drying agent (i.e., flowing from the drying unit to the mixing unit). In particular, the temperature of the drying agent may be determined while the drying agent is moved from the mixing unit to the drying zone. As specified above, the expression determining may be or include measuring and/or calculating, unless indicated otherwise or technically inappropriate. The expression monitoring may be or include determining continuously or repeatedly over a time period, unless indicated otherwise or technically inappropriate. The monitoring may be carried out in a time dependent manner.

The corresponding battery manufacturing system may comprise a temperature sensor configured to determine the temperature of the drying agent. The temperature sensor may be arranged in or at the mixing unit, the drying unit, and/or any conduit fluidly connecting the mixing unit and the drying unit. In particular, the temperature sensor may be arranged such to determine the temperature of the drying agent moving from the mixing unit to the drying zone. For example, the temperature sensor may be or include a thermometer. For example, the temperature sensor may be or include a thermometer may be a thermocouple or a resistance temperature detector (RTD) comprising a Pt100.

The battery manufacturing system and/or the mixing unit may comprise a sensing device. The sensing device may be configured to determine the humidity and/or the temperature of the drying agent. The sensing device may comprise the humidity sensor and/or temperature sensor as described above. Additionally or alternatively, the sensing device may comprise an additional humidity sensor and/or an additional temperature sensor as described below. More specifically, the sensing device may comprise all of these sensors. As such, the temperature sensor and the humidity sensor may be collectively referred to as a sensing device. In specific examples, the temperature sensor and the humidity sensor may be implemented in a single device, which may be referred to as the sensing device.

The determined humidity (described above) and/or the determined temperature may be used for controlling the temperature of the drying agent. In particular, the determined temperature (and/or the determined humidity) may be used to control the addition of the external gas to the drying agent in the mixing unit. More specifically, the inflow of the external gas may be changed as a function of the determined temperature (and/or the determined humidity).

In addition, the determined temperature (and/or the determined humidity) of the drying agent may be used to control an operational status of a heater and/or a cooler to increase, decrease or maintain the temperature of the drying agent. In this manner, the temperature of the drying agent may be controlled as a function of the determined temperature (and/or the determined humidity) of the drying agent.

In addition or alternatively, the battery manufacturing method may comprise determining, particularly monitoring, a temperature of the external gas. The corresponding battery manufacturing system may comprise an additional temperature sensor configured to determine the temperature of the external gas. For example, the additional temperature sensor may be arranged on the outside of the mixing unit and the drying unit. For example, the additional temperature sensor may be arranged at or in the port system, particularly in or at the inlet port. The determined temperature of the external gas may be taken into account for controlling the temperature (and/or humidity) of the drying agent, particularly by controlling the inflow of the external gas accordingly.

The determined temperature (and/or the determined humidity) of the drying agent may be used to control an operational status of a heater and/or a cooler to increase, decrease or maintain the temperature of the drying agent. In this manner, the temperature of the drying agent may be controlled as a function of the determined temperature (and/or the determined humidity) of the drying agent.

In addition, the determined temperature (and/or the determined humidity) of the external gas may be used to control the operational status of a heater and/or a cooler to increase, decrease or maintain the temperature of the drying agent.

The determined temperature may be used for controlling the temperature of the drying agent via a temperature control loop. For example, in the temperature control loop, the inflow of the external gas may be increased, decreased or maintained as a function of the determined temperature of the drying agent. If the temperature of the drying agent is outside a target temperature range, the inflow of external may be decreased or increased, depending on the temperature of the drying agent and/or the temperature of the external gas.

In addition, the operational status of a heater and/or a cooler may be controlled as a function of the temperature of the drying agent and/or the temperature of the external gas. In this manner, the mixing unit may be configured to automatically control the temperature of the drying agent via the temperature control loop.

In further examples of the battery manufacturing method, the controlling of the humidity of the drying agent may also take into account the temperature of the drying agent and/or the temperature of the external gas. The controlling of the temperature of the drying agent may also take into account the humidity of the drying agent and/or the humidity of the external gas. Hence, in the battery manufacturing method disclosed herein, controlling the humidity and the temperature of the drying agent may be carried out as a function of the determined humidity and/or the determined temperature.

The humidity and the temperature of the drying agent may be controlled via a combined humidity and temperature control loop. More specifically, the inflow of the external gas may be changed as a function of the determined humidity and/or the determined temperature of the drying agent (and/or the external gas). Additionally or alternatively, the humidifying power of the humidifier may be changed as a function of the determined humidity and/or the determined temperature (and/or the external gas). Additionally or alternatively, the heating (or cooling) power of the heater (or cooler) may be changed as a function of the determined humidity and/or the determined temperature (and/or the external gas).

The battery manufacturing system, and particularly the mixing unit, may comprise a control unit configured to control the humidity of the drying agent via the humidity control loop and/or to control the temperature of the drying agent via the temperature control loop. The control unit may be configured to condition, particularly to control the humidity and/or the temperature of the drying agent in the mixing unit as a function of at least one of the following: the determined temperature of the drying agent, the determined humidity of the drying agent, the determined temperature of the external gas, and the determined humidity of the external gas. This may allow for a precise control of the ambient parameters for drying the battery part. The control unit described above may be configured to control the port system.

Furthermore, the control unit may be coupled to the sensing device and/or the port system, particularly to the inlet port of the port system. The control unit may be configured to receive, from the sensing device, any of the humidity of the drying agent, the temperature of the drying agent, the humidity of the external gas and the temperature of the external gas.

The control unit may be configured to compare the ambient parameters of the drying agent to a respective target range. If the control unit determines that any of the ambient parameters of the drying agent is outside of the respective target range, the control unit may send a control signal to the port system, particularly the inlet port, to cause the port system to change the inflow of the external gas, particularly to cause the inlet port of the port system to change a state of its valve (change to a differently opened level or a closed level).

Alternatively or additionally, the control unit may be coupled to a humidifier, which may be configured to humidify the drying agent in the mixing unit as described herein. The humidifier may be configured to introduce water vapor to the drying agent, particularly in the mixing unit. If the control unit determines that the received humidity is outside of the target humidity range, the control unit may send a control signal to the humidifier to control an operational state of the humidifier.

Alternatively or additionally, the control unit may be coupled to a heater, which is described in detail below, that may be configured to heat the drying agent. If the control unit determines that the received temperature is outside of the target temperature range, the control unit may send a control signal to the heater to control an operational state of the heater. Alternatively or additionally, the control unit may be coupled to a cooler that may be configured to decrease the temperature of the drying agent as also described below. If the control unit determines that the received temperature is outside of the target temperature range, the control unit may send a control signal to the cooler to control the operational state of the cooler.

Accordingly, the port system as described above may be further operable to control the inflow of external gas to be added to the drying agent in order to condition the drying agent. More specifically, the port system may be operably connected to the mixing unit, particularly the control unit of the mixing unit as described above, and operated by the mixing unit to control the inflow of external gas as a function of at least one of the following: the determined temperature of the drying gas, the determined humidity of the drying gas, the determined temperature of the external gas, and the determined humidity of the external gas. The ambient parameters including the determined temperature of the drying gas, the determined humidity of the drying gas, the determined temperature of the external gas, and the determined humidity of the external gas may be collectively referred to herein as determined ambient parameters. As such, the port system may be operable to change the inflow of the external gas to the mixing unit as a function of any or all of the determined ambient parameters. Additionally or alternatively, the port system may be operable to change a mixing ratio of the drying agent and the external gas as a function of any or all of the determined ambient parameters as described herein.

The port system may be operably connected with any of the humidity control loop, the temperature control loop and the combined humidity and temperature control loop as described above. Accordingly, the port system may be operated to control the inflow of the external gas via any of the humidity control loop, the temperature control loop and the combined humidity and temperature control loop as described above. As such, the port system may be operated to control the inflow of the external gas as a function of any of the determined ambient parameters described above. Additionally or alternatively, the port system may be operated to control a mixing ratio of the drying agent and the external gas as a function of any of the determined ambient parameters as described herein.

In particular, the port system may be operated by the mixing unit to increase, decrease, or maintain the inflow of the external gas as a function of the determined humidity of the drying agent and/or the external gas via the humidity control loop. For example, if the humidity of the drying agent is below a target humidity range and if the humidity of the external gas is lower than the humidity of the drying agent, the port system may be operated to decrease the inflow of external gas. If the humidity of the drying agent is below a target humidity range and if the humidity of the external gas is higher than the determined humidity of the drying agent, the port system may be operated to increase the inflow of external gas. If the humidity of the drying agent is above a target humidity range and if the humidity of the external gas is lower than the determined humidity of the drying agent, the port system may be operated to increase the inflow of external gas. If the humidity of the drying agent is above a target humidity range and if the humidity of the external gas is higher than the determined humidity of the drying agent, the port system may be operated to decrease the inflow of external gas. If the humidity of the drying agent is in a target humidity range, the port system may be operated to maintain the inflow of external gas. If the humidity of the drying agent is outside a target humidity range and the humidity of the drying agent and the external gas are substantially equal or equal, the port system may be operated to maintain the inflow of external gas. Accordingly, the humidifier may be operated to change an operational status, particularly a humidifying power, depending on the determined humidity of the drying agent and/or the external gas as explained below.

Additionally or alternatively, the port system may be operated to increase, decrease, or maintain a mixing ratio of the drying agent with the external gas in the mixing unit as a function of the determined humidity of the drying agent and/or the external gas via the humidity control loop. For example, if the humidity of the drying agent is below a target humidity range and if the humidity of the external gas is higher than the determined humidity of the drying agent, the port system may be operated to decrease the mixing ratio of the drying agent in relation to the external gas (i.e., let more external gas in). For example, if the humidity of the drying agent is above a target humidity range and if the humidity of the external gas is lower than the determined humidity of the drying agent, the port system may be operated to decrease the mixing ratio of the drying agent in relation to the external gas (i.e., let more external gas in). In other cases, depending on the measured ambient parameters, the port system may be operated to increase or maintain the mixing ratio of the drying agent in relation to the external gas in the mixing unit. For example, if the humidity of the drying agent is in a target humidity range, the port system may be operated to maintain the mixing ratio of the drying agent in relation to the external gas in the mixing unit. Furthermore, if the humidity of the drying agent is outside a target humidity range and the humidity of the drying agent and the external gas are substantially equal or equal, the port system may be operated to maintain the mixing ratio of the drying agent with the external gas in the mixing unit.

Additionally or alternatively, the port system may be operated to increase, decrease, or maintain the inflow of the external gas as a function of the determined temperature of the drying agent and the external gas via the temperature control loop as follows. If the temperature of the drying agent is below a target temperature range and if the temperature of the external gas is lower than the determined temperature of the drying agent, the port system may be operated to decrease the inflow of external gas. If the temperature of the drying agent is below a target temperature range and if the temperature of the external gas is higher than the determined temperature of the drying agent, the port system may be operated to increase the inflow of external gas. If the temperature of the drying agent is above a target temperature range and if the temperature of the external gas is lower than the determined temperature of the drying agent, the port system may be operated to increase the inflow of external gas. If the temperature of the drying agent is above a target temperature range and if the temperature of the external gas is higher than the determined temperature of the drying agent, the port system may be operated to decrease the inflow of external gas. If the temperature of the drying agent is in a target temperature range, the port system may be operated to maintain the inflow of external gas. If the temperature of the drying agent is outside a target temperature range and the temperature of the drying agent and the external gas are substantially equal or equal, the port system may be operated to maintain the inflow of external gas. Accordingly, the heater and/or cooler may be operated to change an operational status depending on the determined temperature of the drying agent and/or external gas as explained below.

Additionally or alternatively, the port system may be operated to increase, decrease, or maintain a mixing ratio of the drying agent with the external gas in the mixing unit as a function of the determined temperature of the drying agent and/or the external gas via the temperature control loop. For example, if the temperature of the drying agent is below a target temperature range and if the temperature of the external gas is higher than the determined temperature of the drying agent, the port system may be operated to decrease the mixing ratio of the drying agent in relation to the external gas (i.e., let more external gas in). For example, if the temperature of the drying agent is above a target temperature range and if the temperature of the external gas is lower than the determined temperature of the drying agent, the port system may be operated to decrease the mixing ratio of the drying agent in relation to the external gas (i.e., let more external gas in). In other cases, depending on the measured ambient parameters, the port system may be operated to increase or maintain the mixing ratio of the drying agent in relation to the external gas in the mixing unit. If the temperature of the drying agent is in a target temperature range, the port system may be operated to maintain the mixing ratio of the drying agent with the external gas in the mixing unit. If the temperature of the drying agent is outside a target temperature range and the temperature of the drying agent and the external gas are substantially equal or equal, the port system may be operated to maintain the mixing ratio of the drying agent with the external gas in the mixing unit.

Additionally or alternatively, the port system may be operated to increase, decrease, or maintain the inflow of the external gas, and/or the mixing ratio of the drying agent and the external gas, as a function of the determined humidity and/or temperature of the drying agent and the external gas via the combined humidity and temperature control loop. More specifically, the port system may be operated to prioritize the humidity control loop over the temperature control loop for controlling the inflow of external gas in the combined humidity and temperature control loop. For example, if the humidity of the drying agent is in a target humidity range and the temperature of the drying agent is (in or) outside a target temperature range, the port system may be operated to maintain the inflow of external gas, and/or the mixing ratio of the drying agent and the external gas. Correspondingly, if the humidity of the drying agent is outside a target humidity range and the temperature of the drying agent is (in or) outside a target temperature range, the port system may be operated to increase or decrease the inflow of external gas, and/or the mixing ratio of the drying agent and the external gas, depending on the determined humidity of the drying agent and/or the external gas as described above. Accordingly, the heater and/or cooler may be operated to maintain or change an operational status depending on the determined temperature of the drying agent and/or external gas as explained below. Alternatively, the port system may be operated to prioritize the temperature control loop over the humidity control loop for controlling the inflow of external gas in the combined humidity and temperature control loop. More specifically, the port system may be operated to increase, decrease, or maintain the inflow of the external gas, and/or the mixing ratio of the drying agent and the external gas, as a function of the determined temperature of the drying agent and/or the external gas as explained above. Accordingly, the humidifier may be operated to change an operational status, particularly a humidifying power for humidifying the drying agent, depending on the determined humidity of the drying agent and/or external gas as explained below.

Additionally or alternatively, the port system may be operable to control the inflow of the external gas to the mixing unit, particularly to change the inflow of the external gas, as a function of the humidity and/or the temperature of the drying agent determined by the sensing device. More particularly, the port system may be operable to change the inflow of the external gas to the mixing unit as a function of the determined humidity and/or temperature (by the sensing device) in the above-described humidity and/or temperature control loop.

Additionally or alternatively, the port system may be operable to control the mixing ratio of the drying agent with the external gas in the mixing unit, particularly to change the mixing ratio of the drying agent with the external gas in the mixing unit, as a function of the humidity and/or temperature of the drying agent determined by the sensing device. More particularly, the port system may be operable to change the mixing ratio of the drying agent with the external gas as a function of the determined humidity and/or temperature (by the sensing device) in the above-described humidity and/or temperature control loop.

For example, the port system may comprise an inlet port for the external gas to feed the external gas to the mixing unit. The inlet port may comprise a valve, particularly a damper, that is operable to be opened or closed. More specifically, the valve may be operable to be opened or closed to in increments or in a continuous manner to (incrementally or continuously) increase or decrease, respectively, the inflow of the external gas to the mixing unit. Additionally, the port system may comprise a return port (as described above) at the return conduit to control the return flow of the drying agent to the mixing unit. The return port may comprise a valve, particularly a damper, that is operable to be opened or closed. More specifically, the valve of the return port may be operable to be opened or closed in increments or in a continuous manner to (incrementally or continuously) increase or decrease, respectively, the return flow of the drying agent to the mixing unit.

The port system may be operated to increase (decrease) the inflow of external gas to the mixing unit, particularly by opening (closing) the valve of the inlet port to a certain level to increase (decrease) the inflow of the external gas to the mixing unit. Additionally or alternatively, the port system may be operated to decrease (increase) the return flow of the drying agent to the mixing unit, particularly by closing (opening) the valve of the return port to a certain level to decrease (increase) the return flow of the drying agent and consequently, to increase (decrease) a mixing ratio of the drying agent with the external gas in the mixing unit. The resulting change in humidity and/or temperature of the drying agent may be determined, more particularly monitored or observed, by the sensing device. If the determined change (by the sensing device) in humidity and/or temperature of the drying agent is moving away from the target range, the port system may be operated to decrease (increase) the inflow of external gas to the mixing unit, particularly by closing (opening) the valve of the inlet port to a certain level to decrease (increase) the inflow of the external gas to the mixing unit. Additionally or alternatively, the port system may be operated to increase (decrease) the return flow of the drying agent to the mixing unit, particularly by opening (closing) the valve of the return port to a certain level to decrease (increase) the return flow of the drying agent and consequently, to decrease (increase) a mixing ratio of the drying agent with the external gas in the mixing unit. The port system may be operated to automatically control, by the mixing unit, the humidity and/or temperature of the drying agent in the above-described humidity and/or temperature control loop.

Additionally or alternatively, the port system may be operated to change the inflow of the external gas to the mixing unit as a function of the determined, by the sensing device, humidity and/or temperature of the drying agent and the determined, by the sensing device, humidity and/or temperature of the external gas as follows. If the determined humidity and/or temperature (by the sensing device) of the drying agent is too low, the port system may be operated to close the valve of the inlet port to a certain level to decrease the inflow of the external gas to the mixing unit (in case the determined humidity and/or temperature of the external gas is lower than the humidity and/or temperature of the drying agent) or may be operated to open the valve of the inlet to a certain level to increase the inflow of the external gas to the mixing unit (in case the determined humidity and/or temperature of the external gas is higher than the humidity and/or temperature of the drying agent).

Additionally or alternatively, the port system may be operated to open the valve of the return port to a certain level to increase the return flow of the drying agent to the mixing unit (in case the determined humidity and/or temperature of the drying agent is too low and the determined humidity and/or temperature of the external gas is lower than the determined humidity and/or temperature of the drying agent). Correspondingly, the port system may be operated to close the valve of the return port to a certain level to decrease the return flow of the drying agent to the mixing unit (in case the determined humidity and/or temperature of the drying agent is too low and the determined humidity and/or temperature of the external gas is higher than the determined humidity and/or temperature of the drying agent).

On the other hand, if the determined humidity and/or temperature of the drying agent is too high, the port system may be operated to open the valve of the inlet to a certain level to increase the inflow of the external gas to the mixing unit (in case the determined humidity and/or temperature of the external gas is lower than the humidity and/or temperature of the drying agent) or to close the valve of the inlet port to a certain level to decrease the inflow of the external gas to the mixing unit (in case the determined humidity and/or temperature of the external gas is higher than the humidity and/or temperature of the drying agent). Additionally or alternatively, the port system may be operated to close the valve of the return port to a certain level to decrease the return flow of the drying agent to the mixing unit (in case the determined humidity and/or temperature of the drying agent is too high and the determined humidity and/or temperature of the external gas is lower than the determined humidity and/or temperature of the drying agent). Correspondingly, the port system may be operated to open the valve of the return port to a certain level to increase the return flow of the drying agent to the mixing unit (in case the determined humidity and/or temperature of the drying agent is too high and the determined humidity and/or temperature of the external gas is higher than the determined humidity and/or temperature of the drying agent).

The battery manufacturing method may further comprise heating the drying agent that flows from the mixing unit to the drying unit. The heating may be performed at the drying conduit. The corresponding battery manufacturing system may comprise a heater configured to heat the drying agent flowing from the mixing unit to the drying unit. The heater may be operably connected with any of the temperature control loop and the combined humidity and temperature control loop as described above. More specifically, the heater may be operably connected to the mixing unit, and particularly the control unit of the mixing unit, and operated by the mixing unit to control the temperature of the drying agent via any of the temperature control loop and the combined humidity and temperature control loop as described above. As such, the heater may be operable to maintain or change an operational status, particularly increasing or decrease a heating power, as a function of the determined temperature of the drying agent and/or the temperature of the external gas.

For example, if the temperature of the drying agent is in a target temperature range, the heater may be operated to maintain an operational status or heating power. If the temperature of the drying agent is below or above a target temperature range, the heater may be operated to increase or decrease, respectively, a heating power to heat the drying agent. More specifically, if the temperature of the drying agent is below a target temperature range and the temperature of the external gas (that is added to the drying agent) is lower than the temperature of the drying agent, the heater may be operated to increase a heating power to heat the drying agent. If the temperature of the drying agent is below a target temperature range and the temperature of the external gas is higher than the temperature of the drying agent, the heater may be operated to maintain or decrease a heating power. If the temperature of the drying agent is above a target temperature range and the temperature of the external gas is higher than the temperature of the drying agent, the heater may be operated to decrease a heating power. If the temperature of the drying agent is above a target temperature range and the temperature of the external gas is lower than the temperature of the drying agent, the heater may be operated to maintain or decrease a heating power.

The battery manufacturing method may further comprise cooling the drying agent that flows from the mixing unit to the drying unit. The cooling may be performed at the drying conduit. The corresponding battery manufacturing system may comprise a cooler configured to heat the drying agent flowing from the mixing unit to the drying unit. The cooler may be operably connected with any of the temperature control loop and the combined humidity and temperature control loop as described above. More specifically, the cooler may be operably connected to the mixing unit, and particularly the control unit of the mixing unit, and operated by the mixing unit to control the temperature of the drying agent via any of the temperature control loop and the combined humidity and temperature control loop as described above. As such, the cooler may be operated to maintain or change an operational status, particularly increasing or decrease a cooling power, as a function of the determined temperature of the drying agent and/or the temperature of the external gas.

For example, if the temperature of the drying agent is in a target temperature range, the cooler may be operated to maintain an operational status or cooling power. If the temperature of the drying agent is below or above a target temperature range, the cooler may be operated to decrease or increase, respectively, a cooling power to cool the drying agent. More specifically, if the temperature of the drying agent is below a target temperature range and the temperature of the external gas (that is added to the drying agent) is lower than the temperature of the drying agent, the cooler may be operated to decrease a cooling power to cool the drying agent. If the temperature of the drying agent is below a target temperature range and the temperature of the external gas is higher than the temperature of the drying agent, the cooler may be operated to maintain or decrease a cooling power. If the temperature of the drying agent is above a target temperature range and the temperature of the external gas is higher than the temperature of the drying agent, the cooler may be operated to increase a cooling power. If the temperature of the drying agent is above a target temperature range and the temperature of the external gas is lower than the temperature of the drying agent, the cooler may be operated to maintain or increase a cooling power.

The humidifier as described herein may be operably connected with any of the humidity control loop and the combined humidity and temperature control loop as described above. More specifically, the heater may be operably connected to the mixing unit, and particularly the control unit of the mixing unit, and operated by the mixing unit to control to control the humidity of the drying agent via any of the humidity control loop and the combined humidity and temperature control loop as described above. As such, the humidifier may be operated to maintain or change an operational status, particularly increasing or decrease a humidifying power of humidifying the drying agent, as a function of the determined humidity of the drying agent and/or the humidity of the external gas.

For example, if the humidity of the drying agent is in a target humidity range, the humidifier may be operated to maintain an operational status or humidifying power of humidifying the drying agent. If the humidity of the drying agent is below or above a target humidity range, the humidifier may be operated to increase or decrease, respectively, a humidifying power. More specifically, if the humidity of the drying agent is below a target humidity range and the humidity of the external gas (that is added to the drying agent) is lower than the humidity of the drying agent, the humidifier may be operated to increase a humidifying power. If the humidity of the drying agent is below a target humidity range and the humidity of the external gas is higher than the humidity of the drying agent, the humidifier may be operated to maintain or decrease a humidifying power. If the humidity of the drying agent is above a target humidity range and the humidity of the external gas is higher than the humidity of the drying agent, the humidifier may be operated to decrease a humidifying power. If the humidity of the drying agent is above a target humidity range and the humidity of the external gas is lower than the humidity of the drying agent, the humidifier may be operated to maintain or decrease a humidifying power.

The method may further comprise at least one of the following, before adding the external gas to the drying agent, humidifying the external gas, heating or cooling the external gas, and filtering the external gas. These processes may be generally referred to as pre-conditioning the external gas. The pre-conditioning of the external gas may be performed via means connected to the port system, particularly in the inlet port, and/or via means outside of the battery manufacturing system.

The battery manufacturing method may further comprise pre-conditioning the external gas, particularly before being added to the drying agent. The pre-conditioning of the external gas may include at least one of the following: adding water vapor to the external gas; heating of the external gas and cooling of the external gas. Adding the external gas that has been pre-conditioned to the drying agent may allow for a more precise control of the ambient parameters of the drying agent, particularly the humidity and/or temperature of the drying agent.

The corresponding battery manufacturing system may comprise a pre-conditioner configured to pre-condition the external gas, particularly before the external gas is added to the drying agent. The pre-conditioner may be or include at least one of a pre-conditioning humidifier, a pre-conditioning heater and a pre-conditioning cooler. The pre-conditioner may be thermally and/or fluidly connected to the inlet port of the port system to pre-condition the external gas.

The battery manufacturing method may further comprise filtering the drying agent, particularly when flowing to the drying zone. The corresponding battery manufacturing system may comprise a filter system configured to filter the drying agent before arriving in the drying agent. The filtering may refer to removing impurities from the drying agent. The impurities may be or include airborne particles or dust. The filtering may be advantageous in preventing impurities from reaching the battery part.

The filter system may be positioned between the mixing unit and the drying unit. Additionally or alternatively, the filter may be arranged in one or more further positions in the battery manufacturing system to filter the drying agent. The filter system may comprise multiple filter units arranged in different positions between the mixing unit and the drying unit, along the drying conduit.

The battery manufacturing method may further comprise filtering the external gas before adding to the drying agent. The corresponding battery manufacturing system may comprise an external gas filter configured to filter the eternal gas before being added to the drying agent. The filtering may refer to removing impurities from the external gas. The impurities may be or include airborne particles or dust. The filtering may be advantageous in preventing any impurities from reaching the battery part.

The battery manufacturing method may further comprise heating the drying agent. The corresponding battery manufacturing system may comprise a heater configured to heat the drying agent. The heater may be, for example, positioned between the mixing unit and the drying unit, along the drying conduit, to heat the drying agent before arriving in the drying unit. In some examples, the heater may be operable in different operational states to vary its heating power, particularly as a function of the temperature and/or humidity of the drying agent.

Additionally or alternatively, the battery manufacturing method may comprise cooling the drying agent. The corresponding battery manufacturing system may comprise a cooler configured to cool the drying agent. The cooler may be, for example, positioned between the mixing unit and the drying unit, along the drying conduit, to cool the drying agent before arriving in the drying unit. In some examples, the cooler may be operable in different operational states to vary its cooling power, particularly as a function of the temperature and/or humidity of the drying agent.

The configuration of the mixing unit to condition the drying agent and the configuration of the flow generator to feed the (conditioned) drying agent to the drying unit enables the battery manufacturing system to control the drying process of the battery part. More particularly, the conditioning of the drying agent in and by the mixing unit may enable control over the drying parameters such as the evaporation rate of the liquid component in the slurry, thereby improving the product quality of a battery.

### BRIEF DESCRIPTION OF THE DRAWINGS

In the following detailed description, examples of the present invention are described with reference to the enclosed drawings. In the drawings and the corresponding description in the following, similar or identical features are referred to using like reference signs. Repetitive description of such similar or identical features will be omitted for the sake of brevity and readability.
- FIG. 1: schematically illustrates a battery manufacturing system.

- FIG. 2: schematically illustrates a battery manufacturing system.

- FIG. 3: schematically illustrates a battery manufacturing system.

- FIG. 4: schematically illustrates a battery manufacturing system.

- FIG. 5: schematically illustrates a battery manufacturing system.

- FIG. 6: is a flow diagram of a battery manufacturing method.
- FIG. 7: is a flow diagram of a battery manufacturing method.

- FIG. 8: is a flow diagram of a battery manufacturing method.
- FIG. 9: is a flow diagram of a battery manufacturing method.

- FIG. 10: is a flow diagram of a battery manufacturing method.

### DETAILED DESCRIPTION

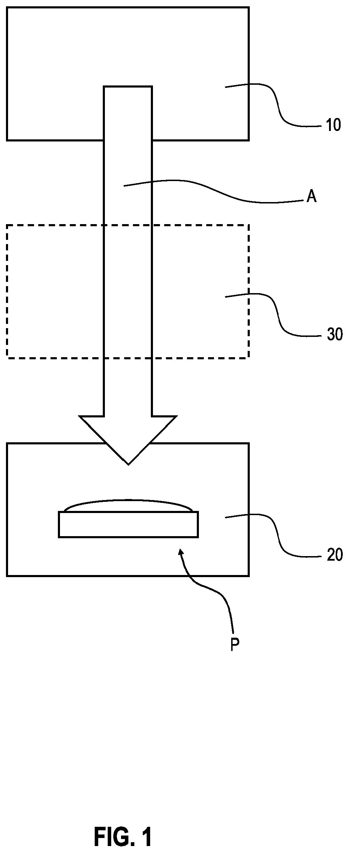

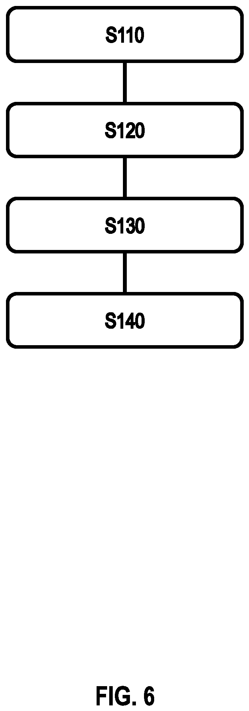

FIG. 1 to 5 each schematically illustrate an example of a battery manufacturing system. The battery manufacturing system may be configured to carry out the battery manufacturing method as disclosed herein, particularly the examples of the battery manufacturing method shown in FIG. 6 to 10. The battery manufacturing system shown in any of FIG. 1 to 6 may be used to manufacture a secondary battery, particularly to dry a battery part including an electrode substrate and a slurry disposed thereon in order to manufacture an electrode of a secondary battery. In addition, the battery manufacturing system shown in FIG. 1 to 5 may comprise any of the features of the battery manufacturing system as described above.

The battery manufacturing system comprises a drying unit 20, a mixing unit 10 and a flow generator 30. The drying unit 20 and the mixing unit 10 are fluidly connected to each other, for example via one or more conduits, channels, tubes, airlocks or the like, or any combination thereof.

The flow generator 30 may be fluidly connected to any or both of the drying unit 20 and the mixing unit 10. In particular, the flow generator 30 may be fluidly connected between the drying unit 20 and the mixing unit 10. Alternatively, the flow generator 30 may be operably coupled to the drying unit 20 and/or the mixing unit 10 without being fluidly connected thereto.

The drying unit 20 is configured to accommodate a battery part P. The battery part P may be a semi-finished part of a secondary battery, particularly slurry containing an active material deposited on an electrode substrate to form an electrode of a secondary battery.

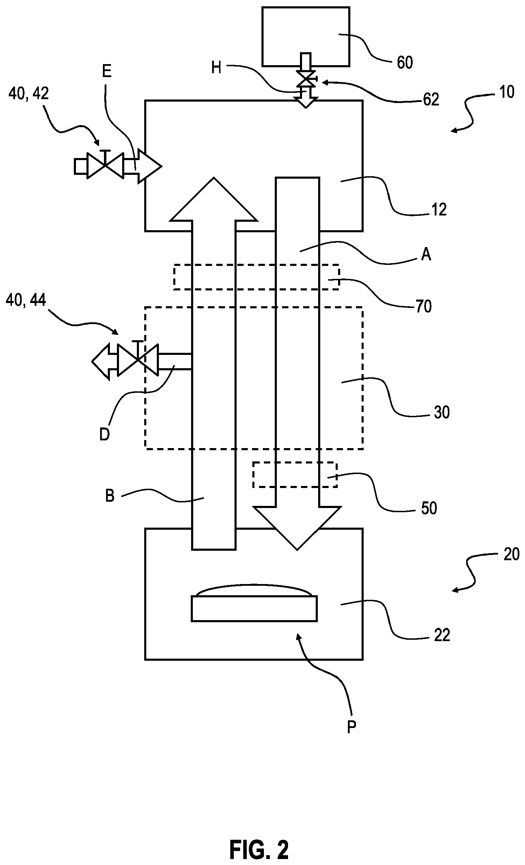

The mixing unit 10 is configured to condition a drying agent, particularly by controlling humidity and/or temperature of the drying agent. The drying agent may be inherently present in the mixing unit 10 and/or introduced into the mixing unit 10. The mixing unit 10 is fluidly connected to the drying unit 20. For example, the mixing unit 10 may be indirectly connected to the drying unit 20 by means of a drying conduit as described. Alternatively, the mixing unit 10 may be directly connected to the drying unit 20 without a physical separation therebetween. Further optionally, the drying agent may be fed to the drying unit 20 via a drying conduit as described herein, and the mixing unit 10 may be (at least partly) provided in or at the drying conduit so as to condition the drying agent in the drying conduit. Further optionally, the mixing unit may comprise a mixing chamber (e.g., a mixing chamber 12 as described in connection with FIG. 2 below) in which the drying agent is conditioned.

The flow generator 30 is configured to move the drying agent from the mixing unit 10 to the drying unit 20. In particular, the flow generator 30 may generate a pressure gradient and/or a fluid current between the mixing unit 10 and the drying unit 20. For example, the flow generator 30 may comprise one or more ventilators, fans, blowers, pumps or the like, or a combination thereof, in order to move the drying agent.

The drying agent moving (i.e., being fed) to the drying unit 20 is depicted as a drying flow A in the drawings. In the drying unit 20, the drying agent may be blown towards the battery part P in order to dry the battery part P, by carrying away vapor from the battery part P. In the battery manufacturing method and system disclosed herein, the mixing unit and the drying unit may be fluidly connected to each other in an airtight manner so as to prevent a passage of any fluid other than the drying agent and the external gas introduced via the port system as described herein (e.g., see FIG. 2 to 5).

As mentioned, the battery manufacturing system may be configured to carry out the battery manufacturing method as disclosed herein. FIG. 6 to 10 each illustrate an example of the battery manufacturing method, specifically to manufacture a secondary battery. Particularly, the battery manufacturing method of FIG. 6 to 10 may be configured to dry a battery part as described above. In addition, the battery manufacturing method of FIG. 6 to 10 may comprise any of the features of the battery manufacturing method as described above.

In the following, the battery manufacturing method of FIG. 6 to 10 will be described with reference to the battery manufacturing system as shown in any of FIG. 1 to 5, unless indicated otherwise or technically inappropriate.

At S110, a drying agent is provided in the mixing unit 10. The drying agent and the mixing unit may have any of the respective features as described above. The drying agent may be present in the mixing unit when the battery manufacturing method starts. Additionally or alternatively, the drying gas may be introduced into the mixing unit when starting and/or while carrying out the battery manufacturing method. The drying agent may include or be air and/or a process gas as described above.

At S120, the battery part P is provided in the drying unit 20. The battery part P may be provided as described above. In particular, the battery part P may include an electrode substrate and a slurry disposed thereon containing an active material as described above.

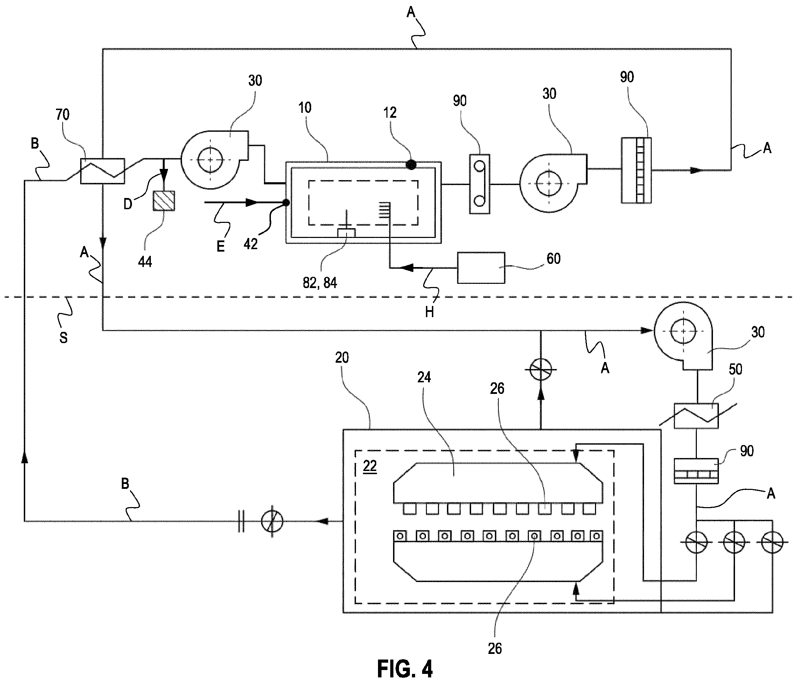

The drying unit 20 may include any of the features of the drying unit described above. Particularly, the drying unit 20 may be provided with heating means (see e.g., FIG. 4) including an array of blowers configured to blow the drying agent towards the battery part, particularly from different directions. In order to optimize the drying process of the battery part P in the drying unit 20, the drying agent may be conditioned by the mixing unit 10.

At S130, the humidity and/or a temperature of the drying agent is controlled by the mixing unit 10. The controlling of the humidity and temperature of the drying agent may be performed as described above. The controlling, or conditioning, of the drying agent by the mixing unit 10 may depend on a type of the drying unit 20, such as a hot blower type, a radiation type and a convection type. The controlling, or conditioning, of the drying agent by the mixing unit 10 may depend on a material of the battery part P, in particular the material of the slurry, such as a binder material, a liquid component, a solid component and a mixing ratio. The controlling, or conditioning, of the drying agent by the mixing unit 10 may depend on a loading of the battery part P, e.g., how much wet material such as the slurry is disposed on a substrate such as the electrode substrate. The controlling, or conditioning, of the drying agent by the mixing unit 10 may also depend on the temperature in the drying unit 20.

As mentioned above, the humidity of the drying agent may be controlled to be, in absolute humidity, between 5 g/kg and 90 g/kg, particularly between 10 g/kg and 80 g/kg, and more particularly between 20 g/kg and 60 g/kg, wherein the unit g/kg may indicate water vapour per mass of dry air. The absolute humidity may be measured by using a conventional hygrometer, such as a capacity humidity sensor, a resistive hygrometer, a thermal hygrometer, a gravimetric hygrometer or an optical hygrometer. Furthermore, the absolute humidity may be determined by first measuring a relative value of the humidity and calculating the absolute humidity from the relative value according to the teachings from the hygrometry.

Additionally or alternatively, the temperature of the drying agent may be controlled to be between 25°C and 400°C, particularly between 50°C and 300°C, or between 60°C and 250°C, and more particularly between 80°C and 200°C. As described herein, the temperature of the drying agent in the drying unit may be higher than in or at the mixing unit, resulting in a temperature difference of 1°C to 200°C, or 5°C to 100°C, or particularly 20°C to 80°C.

At S140, the drying agent is fed from the mixing unit 10 to the drying unit 20. In particular, in the battery manufacturing method and system disclosed herein, the mixing unit and the drying unit may be fluidly connected to each other in an airtight manner so as to prevent a passage of any fluid other than the drying agent and the external gas introduced via the port system as described herein (e.g., see FIG. 2 to 5).

In order to provide the drying agent at a raised temperature, the battery manufacturing system may additionally comprise a heater 50 (e.g., see FIG. 2 to 5) separate from the mixing unit 10 and located between the mixing unit 10 and the drying unit 20. The heater 50 may be configured to increase the temperature of the drying agent before being fed to the drying unit 20. The heater 50 which may be or include any of a flow-type heater, an infrared heater, a convection heater, a fan heater, a storage heater, a heat pump and a resistive heater.

FIG. 2 shows a schematic view of another example of the battery manufacturing system. The battery manufacturing system in FIG. 2 may comprise any of the features of the battery manufacturing system as described above and shown in FIG. 1.

In FIG. 2, the battery manufacturing system further comprises a port system 40 that is configured to enable an external gas to be added to the drying agent in order to condition the drying agent. For this purpose, the port system 40 may comprise an inlet port 42 to enable and control an inflow E of the external gas. The external gas may be ambient air and/or a process gas. The external gas may be added to the drying agent in the mixing unit 10. The port system 40 may be configured to control the inflow E of the external gas via the humidity control loop, the temperature control loop or the combined humidity and temperature control loop as described above. The port system 40 may include any of the features of a port system as described above.

The port system 40 may be further configured to enable and control the drying agent to exhaust from the battery manufacturing system. For this purpose, the port system 40 may comprise an exhaust port 44 to enable and control an exhaust (discharge) D of the drying agent. In particular, the exhaust port 44 may be passively operated to enable a relief of an overpressure that may occur due to intake of the external gas and/or an increase of temperature of the drying agent. Alternatively or additionally, the exhaust port 44 may be actively operated to open, close and be in an intermediate state on demand. While the exhaust port 44 is illustrated to be located between the drying unit 20 and the mixing unit 10 at the return flow B in FIG. 2, the exhaust port 44 is not limited thereto, and may be located at the mixing unit 10 (e.g., being fluidly connected to the mixing chamber 12 described below).

Further in FIG. 2, the flow generator 30 is additionally configured to redirect the drying agent from the drying unit 20 to the mixing unit 10, as indicated by a return flow B in FIG. 2. Although not explicitly shown in FIG. 1 to 3, the battery manufacturing system is configured such that the drying flow A and the return flow B are fluidly separate from each other, for example by means of a drying conduit corresponding to reference sign A and a return conduit corresponding to reference sign B that are fluidly separate from each other, i.e., they are not directly connected to each other.

Accordingly, the flow generator 30 is configured to establish a circulation of the drying agent, by moving the drying agent in a cycle including and/or passing through the drying unit 20 and the mixing unit 10. For this purpose, the mixing unit 10 and the drying unit 20 are fluidly connected to each other in an airtight manner so as to prevent a passage of any fluid other than the drying agent and the external gas introduced via the port system 40. Thus, the mixing chamber 12, the drying chamber 22, the drying conduit A and the return conduit B may be fluidly connected to one other in an aright manner.

Generally and as described above, the mixing unit 10 may be arranged at any suitable position in the battery manufacturing system to provide a space in which the drying agent is conditioned, i.e., the humidity and/or temperature of the drying agent is controlled. The mixing unit 10 in the example of FIG. 2 comprises a mixing chamber 12 that may be fluidly connected to the drying unit 20 via a drying conduit (implied in FIG. 2 by arrow A) and a return conduit (implied in FIG. 2 by arrow B). The drying agent is conditioned, i.e., the humidity and the temperature of the drying agent are controlled by the mixing unit 10 the mixing chamber 12. Alternatively, and not explicitly shown in FIG. 2, the mixing unit may be arranged, and/or configured to condition the drying agent, in the drying conduit A. If so, the mixing chamber 12 may be additionally present or may be omitted.

Additionally and optionally, the battery manufacturing method may further comprise controlling a mixing ratio of the inflow E the external gas and the return flow B of the drying agent. The corresponding battery manufacturing system may be configured to control a mixing ratio of the inflow E of the external gas and the return flow B of the drying agent. The mixing ratio may be used as a parameter or a variable to condition the drying agent, i.e., to control the humidity and/or the temperature of the drying agent in the above-described manner. The mixing ratio may be controlled by controlling the return flow B of the drying agent and the inflow E of the external gas in combination. Any or both of the return flow B and the inflow E may be controlled by controlling a respective mass flow rate and/or a respective flow cross section, which may be each controllable by operating a respective valve or damper in the above-described manner. The mixing ratio may be controlled in the mixing chamber 12 or at any other suitable position, including particularly in or at the drying conduit A.

Further in FIG. 2, the drying unit 20 comprises a drying chamber 22 in which the battery part P may be received and accommodated during a drying process. Although not shown, the drying chamber 22 encloses an array of blowers configured to blow the drying agent received from the mixing unit 10 towards the battery part P.

The battery manufacturing system may comprise a humidifier 60 configured to pre-humidify the drying agent before being fed to the drying unit 20, as indicated by water vapor inflow H in FIG. 2. In particular, the humidifier 60 may be configured to feed water vapor H to the drying agent in the mixing unit 10. Accordingly, a pre-humidified drying agent may be prepared in the mixing unit 10 that can be fed to the drying unit 20 as the drying agent. The humidifier 60 may include any of the features of a humidifier as described above.

The battery manufacturing system optionally comprises a heat exchanger 70 configured to transfer heat between the drying flow A of the drying agent from the mixing unit 10 to the drying unit 20 and the return flow B of the drying agent from the drying unit 20 to the mixing unit 10. The heat exchanger 70 may include any of the features of the heat exchanger described above.

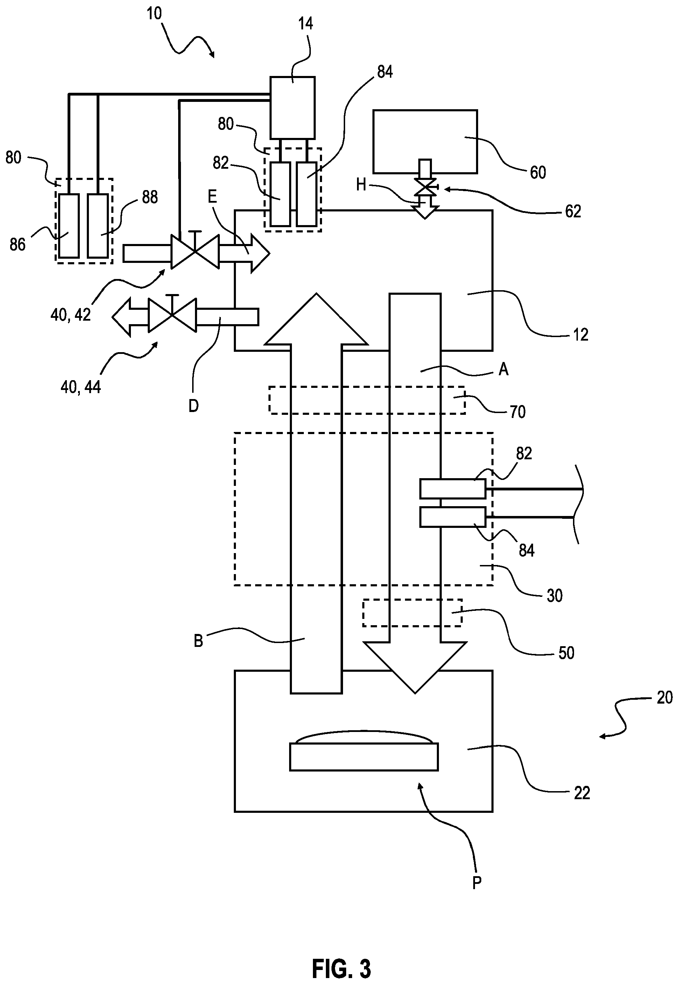

FIG. 3 shows a schematic view of another example of the battery manufacturing system. The battery manufacturing system in FIG. 3 may comprise any of the features of the battery manufacturing system as described above and shown in FIG. 1 or 2.

In FIG. 3, the battery manufacturing system further comprises a sensing device 80. In the example shown in FIG. 3, the sensing device 80 comprises a humidity sensor 82, a temperature sensor 84, an additional humidity sensor 86 and an additional temperature sensor 88. This, however, is an illustrative example. In other examples, the sensing device may include less sensors or more sensors, which may also be arranged differently than shown in FIG. 3.

The humidity sensor 82 is configured to determine the humidity of the drying agent in the mixing chamber 12 and/or in the drying conduit A. The temperature sensor 84 is configured to determine the temperature of the drying agent in the mixing chamber 12 and/or in the drying conduit A.

The additional humidity sensor 86 is configured to determine the humidity of the external gas in a position outside of the mixing chamber 12, particularly in vicinity of the inlet port 42. The additional temperature sensor 88 is configured to determine the temperature of the external gas in a position outside of the mixing chamber 12, particularly in vicinity of the inlet port 42.

The sensors 82-88 may be configured as described above. Any of the sensors 82-88 may be connected to a control unit 14 of the mixing unit 10 so as to communicate a respective measurement signal to the control unit 14 and/or to receive a respective control signal from the control unit 14.

The control unit 14 may be further connected to the inlet port 42. The control unit 14 may comprise a processing unit, a memory and communication means to receive the measurement signals from the sensors 82-88, and to calculate and/or store at least one of the determined ambient parameters, including the determined temperature of the drying agent, determined humidity of the drying agent, determined temperature of the external gas and determined humidity of the external gas. Furthermore, the control unit 14 may store control instructions to be executed, e.g., by sending control signals, as a function of the respective ambient parameter. The control unit 14 may be configured to control an operational status of the inlet port 42 as a function of any of the ambient parameters received from the sensors 82-88.

FIG. 4 shows a schematic view of another example of the battery manufacturing system. The battery manufacturing system in FIG. 4 may comprise any of the features of the battery manufacturing system as described above and shown in FIG. 1 to 3.

In FIG. 4, the battery manufacturing system further comprises a filter system 90 that may comprise one or more filters. In the example shown in FIG. 4, the filter system 90 comprises three filters arranged in different positions at the drying conduit A from the mixing unit 10 to the drying unit 20. In particular, the filters 90 may provide different levels of filtrations, and may include a cartridge filter, a medium filter, a fine filter and the like. The filter system 90 may be configured as described above.

In FIG. 4, the flow generator 30 comprises three fans to generate a flow of the drying agent in a cycle, thus to establish a circulation. The cycle, or the circulation loop, of the drying agent passes through and includes the mixing unit 10, the drying conduit A, the drying unit 20 and the return conduit B. Furthermore, the cycle of the drying agent may pass through the filters 90 and the heater 50. The fans of the flow generator 30 may be arranged in different positions at the drying conduit A and the return conduit B in a distributed manner, for example before and after the mixing unit 20, and before the drying unit 20 in terms of the circulation direction of the drying agent (as indicated by arrows in FIG. 4).

Further in FIG. 4, the drying unit 20 comprises an accommodation unit 24 and an array of blowers 26. The accommodation unit 24 is configured to accommodate the battery part P during the drying process. The accommodation unit 24 may be motorized to move the battery part P through the drying unit 20 while the battery part P is being dried.

The blowers 26 are arranged such to blow the drying agent towards the battery part P accommodated in the accommodation unit 24 from different directions. The blowers 26 may be each fluidly connected to the drying conduit A to receive the drying agent from the mixing unit 10. The blowers 26 may comprise nozzle arrangements.

Optionally, a part of the battery manufacturing system, particularly including the mixing unit 10, may be arranged outdoors in order to shorten a path for an intake of the external gas, which may be the ambient air. A rest part of the battery manufacturing system, particularly including the drying unit 20, may be arranged indoors, in order to better control the ambient parameters for the drying process of the battery part P. In FIG. 4, an imaginary line S may indicate the separation between an outdoors part of the battery manufacturing system (upside in the orientation of FIG. 4) and an indoors part of the battery manufacturing system (downside in the orientation of FIG. 4).

In addition and optionally, the battery manufacturing system may comprise one or more dampers configured to change and/or distribute a flow of the drying agent in the cycle.

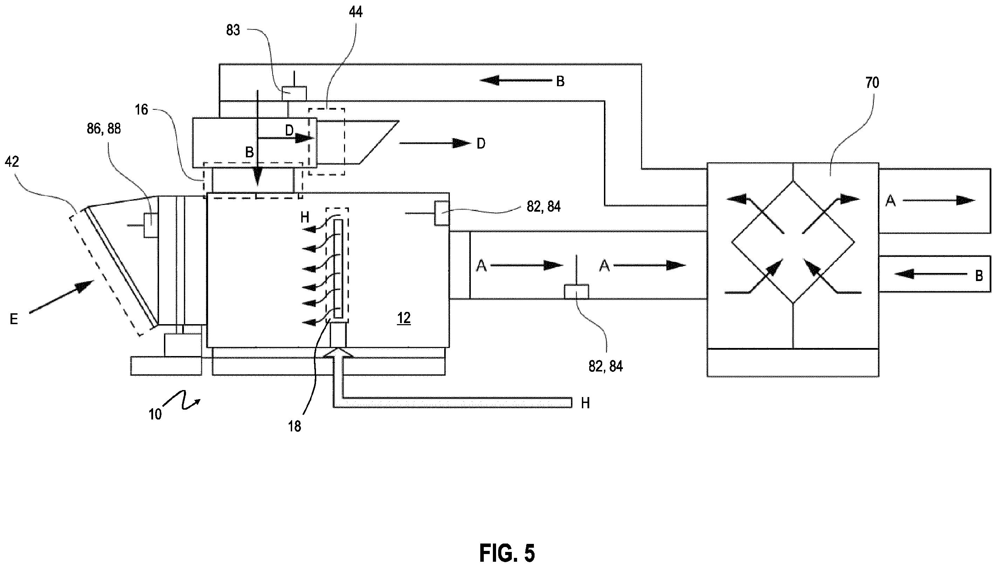

FIG. 5 shows a schematic view of another example of the battery manufacturing system. The battery manufacturing system in FIG. 4 may comprise any of the features of the battery manufacturing system as described above and shown in FIG. 1 to 3.

In FIG. 5, flow conduits are illustrated in detail. In particular, the drying conduit A and the return conduit B may cross inside the heat exchanger 70 so as to allow a heat transfer to each other.

Further in FIG. 5, the sensor device comprises humidity and temperature sensors 82, 84 arranged in the mixing chamber 12 and in the drying conduit A, and additional humidity and temperature sensors 86, 88 arranged at the inlet port 42. Additionally and optionally, the sensing device further comprises an extra humidity and/or temperature sensor 83 arranged in the return conduit B upstream of the mixing unit 10. The extra humidity and/or temperature sensor 83 may be arranged just upstream, in or at the exhaust port 44, which is arranged just upstream of the mixing unit 10.

Further in FIG. 5, the mixing unit 10 additionally comprises a cycle damper 16 that may be in different operational states, including a fully open state, a closed state and one or more continuous intermediate states. The cycle damper may be a butterfly valve. The mixing unit 10 may control the cycle damper 16 to control a flow rate of the drying agent returning to the mixing unit 10 via the return conduit B. The control of the cycle damper 16 may also be coupled to the control of the exhaust port 44 and/or the inlet port 42.

As further shown in FIG. 5, the mixing chamber 12 may comprise an injection port 18 fluidly connected with the humidifier 60. The water vapor H from the humidifier may be let into the mixing chamber 12 via the injection port 18.

In particular, the example shown in FIG. 5 is operable to control a mixing ratio of the inflow E of the external gas and the return flow B of the drying agent by controlling the cycle damper 16, the inlet port 42 and the exhaust port 44 in combination. Accordingly, the return flow B of the drying agent, the inflow E of the external gas and the exhaust D of the drying agent may be controlled in combination. The mixing ratio may be used as a parameter or a variable to condition the drying agent, i.e., to control the humidity and/or the temperature of the drying agent in the above-described manner.

As mentioned above, it is optional that the mixing unit 10 comprises the mixing chamber 12 as shown in the example of FIG. 5. Alternatively or additionally, the mixing unit 10 may be implemented at any other suitable position, including particularly in or at the drying conduit A. Accordingly, the drying agent may be conditioned and/or the mixing ratio may be controlled at any other suitable position, including particularly in or at the drying conduit A.

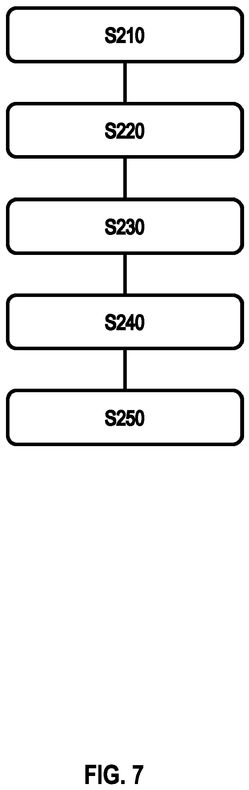

FIG. 7 to 10 each illustrate an example of the battery manufacturing method disclosed herein. As mentioned above, any of the examples shown in FIG. 7-10 may be carried out using the battery manufacturing system disclosed herein, in particular the examples shown in FIG. 1 to 5. Hence, reference is made in the following to the drawings FIG. 1-5.

FIG. 7 illustrates a first battery manufacturing method. The battery manufacturing method may comprise the following steps. S210: Providing a drying agent in a mixing unit 10. S220: Pre-humidifying the drying agent and feeding the pre-humidified drying agent to a drying unit 20 S230: Providing a battery part P in the drying unit 20. S240: Controlling, by the mixing unit 10, humidity of the drying agent. Alternatively or additionally, controlling, by the mixing unit 10, temperature of the drying agent. And S250: Feeding the drying agent from the mixing unit 10 to the drying unit 20. The battery part P may be a part of a secondary battery, particularly slurry deposited on an electrode substrate.

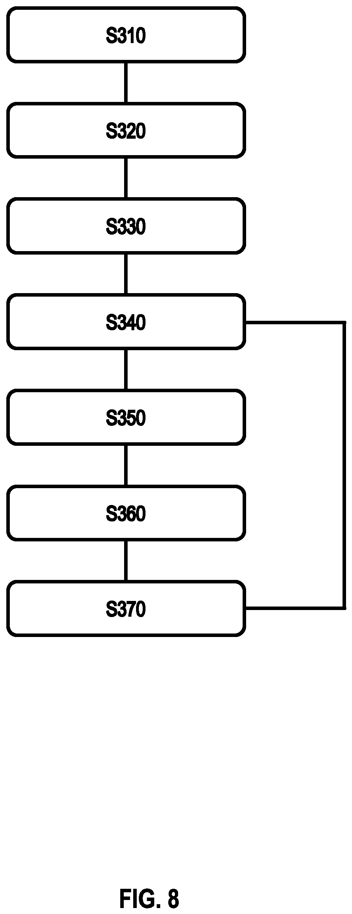

FIG. 8 illustrates a second battery manufacturing method. The battery manufacturing method may comprise the following steps. S310: Providing a drying agent in a mixing unit 10. S320: Pre-humidifying the drying agent and feeding the pre-humidified drying agent to a drying unit 20. S330: Providing a battery part P in the drying unit 20. S340: Adding external gas to the drying agent in the mixing unit 10 to control the humidity of the drying agent. S350: Feeding the drying agent from the mixing unit 10 to the drying unit 20. S360: Exhausting (actively or passively) a part of the drying agent. And S370: Feeding the drying agent from the drying unit 20 to the mixing unit 10. In particular, the drying agent may be re-directed or re-circulated from the drying unit 20 to the mixing unit 10. More specifically, the drying agent may be moved in and between the mixing unit 10 and the drying unit 20 in a cycle or circulation loop. The battery part P may be a part of a secondary battery, particularly slurry deposited on an electrode substrate.

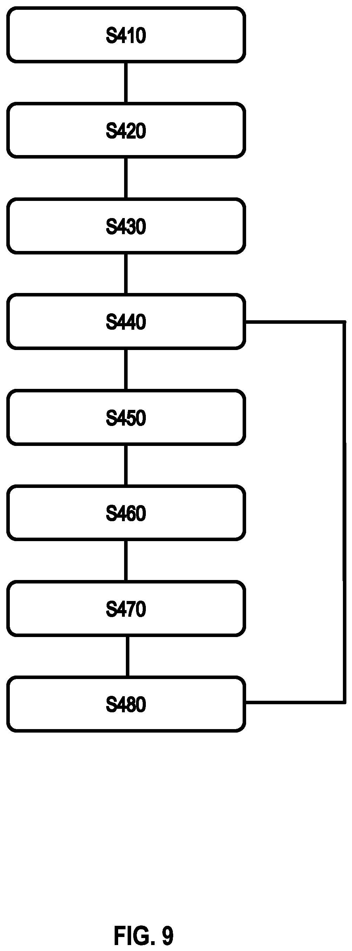

FIG. 9 illustrates a third battery manufacturing method. The battery manufacturing method may comprise the following steps. S410: Providing a drying agent in a mixing unit 10. S420: Pre-humidifying the drying agent and feeding the pre-humidified drying agent to a drying unit 20. S430: Providing a battery part P in the drying unit 20. S440: Determining humidity and/or temperature of the drying agent in the mixing unit 10. Additionally, the humidity and/or temperature of the drying agent may be determined in the drying unit 20. S450: Adding external gas to the drying agent in the mixing unit 10 to control the humidity of the drying agent, wherein the inflow E of the external gas is controlled as a function of the determined humidity and/or temperature of the drying agent. S460: Feeding the drying agent from the mixing unit 10 to the drying unit 20. S470: Exhausting (actively or passively) a part of the drying agent. And S480: Feeding the drying agent from the drying unit 20 to the mixing unit 10. In particular, the drying agent may be re-directed or re-circulated from the drying unit 20 to the mixing unit 10. More specifically, the drying agent may be moved in and between the mixing unit 10 and the drying unit 20 in a cycle or circulation loop. The return flow B of the drying agent from the drying unit 20 to the mixing unit 10 may be controlled. The battery part P may be a part of a secondary battery, particularly slurry deposited on an electrode substrate.

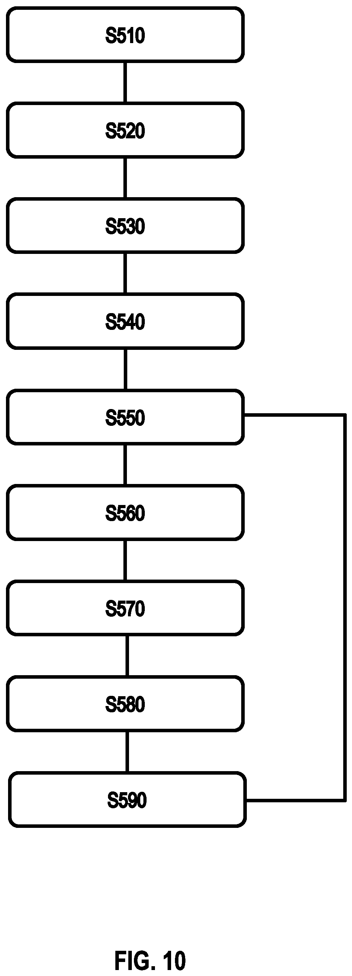

FIG. 10 illustrates a fourth battery manufacturing method. The battery manufacturing method may comprise the following steps. S510: Providing a drying agent in a mixing unit 10. S520: Pre-humidifying the drying agent and feeding the pre-humidified drying agent to a drying unit 20. S530: Providing a battery part P in the drying unit 20. S540: Pre-conditioning external gas. S550: Determining humidity and/or temperature of the drying agent in the mixing unit 10. Additionally, the humidity and/or temperature of the drying agent may be determined in the drying unit 20. S560: Adding the (pre-conditioned) external gas to the drying agent in the mixing unit 10 to control the humidity of the drying agent, wherein the inflow E of the external gas is controlled as a function of the determined humidity and/or temperature. S570: Feeding the drying agent from the mixing unit 10 to the drying unit 20. S580: Exhausting (actively or passively) a part of the drying agent. And S590: Feeding the drying agent from the drying unit 20 to the mixing unit 10. In particular, the drying agent may be re-directed or re-circulated from the drying unit 20 to the mixing unit 10. More specifically, the drying agent may be moved in and between the mixing unit 10 and the drying unit 20 in a cycle or circulation loop. The return flow B of the drying agent from the drying unit 20 to the mixing unit 10 may be controlled. The battery part P may be a part of a secondary battery, particularly slurry deposited on an electrode substrate.

## Claims

1. A battery manufacturing method comprising:
providing a battery part (P) in a drying unit (20);
providing a drying agent in a mixing unit (10);
controlling, by the mixing unit (10), humidity and/or temperature of the drying agent by adding an external gas to the drying agent in the mixing unit (10);
feeding the drying agent from the mixing unit (10) to the drying unit (20); and
the method being **characterised by**:
re-directing the drying agent from the drying unit (20) to the mixing unit (10) to establish a circulation of the drying agent.

2. The battery manufacturing method of claim 1, further comprising:
introducing water vapor directly into the mixing unit (10).

3. The battery manufacturing method of any one of the preceding claims, further comprising:
determining humidity and/or temperature of the drying agent.

4. The battery manufacturing method of any one of the preceding claims, further comprising:
determining humidity and/or temperature of the external gas before adding to the drying agent in the mixing unit (10).

5. The battery manufacturing method of any one of the preceding claims, wherein an inflow (E) of the external gas is controlled as a function of at least one of the following:
the humidity of the drying agent;
the temperature of the drying agent;
the humidity of the external gas; and
the temperature of the external gas.

6. The battery manufacturing method of any one of the preceding claims, further comprising:
heating the drying agent flowing from the mixing unit (10) to the drying unit (20).

7. A battery manufacturing system, which is configured to perform the method of any one of claims 1 to 6, the battery manufacturing system comprising:
a drying unit (20) configured to accommodate a battery part (P);
a mixing unit (10) configured to condition a drying agent;
a port system (40) configured to enable, particularly to control, an external gas to be added to the drying agent in order to condition the drying agent; and
a flow generator (30) configured to move the drying agent from the mixing unit (10) to the drying unit (20) for drying the battery part (P),
**characterised in that**
the flow generator (30) is further configured to re-direct the drying agent from the drying unit (20) to the mixing unit (10) in a cycle.

8. The battery manufacturing system of claim 7, further comprising:
a humidifier (8) configured to introduce water vapor directly into the mixing unit (10).

9. The battery manufacturing system of claim 7 or 8, further comprising:
a sensing device (80) configured to determine at least one of the following:
- humidity of the drying agent;
- temperature of the drying agent;
- humidity of the external gas; and
- temperature of the external gas.

10. The battery manufacturing system of claim 9,
wherein the port system (40) is operable by the mixing unit (10) to control an inflow (E) of the external gas as a function of at least one of the following:
humidity of the drying agent;
temperature of the drying agent;
humidity of the external gas; and
temperature of the external gas

11. The battery manufacturing system of any one of claims 7 to 10, further comprising:
a heater (50) configured to heat the drying agent flowing from the mixing unit (10) to the drying unit (20).

## Patentansprüche

1. Batterieherstellungsverfahren umfassend:
Bereitstellen eines Batterieteils (P) in einer Trocknungseinheit (20);
Bereitstellen eines Trocknungsmittels in einer Mischeinheit (10);
Steuern, durch die Mischeinheit (10), von Feuchtigkeit und/oder Temperatur des Trocknungsmittels durch Hinzufügen eines externen Gases zu dem Trocknungsmittel in der Mischeinheit (10);
Zuführen des Trocknungsmittels von der Mischeinheit (10) zu der Trocknungseinheit (20); und
wobei das Verfahren **gekennzeichnet ist durch**:
Umleiten des Trocknungsmittels von der Trocknungseinheit (20) zu der Mischeinheit (10), um eine Zirkulation des Trocknungsmittels herzustellen.

2. Batterieherstellungsverfahren nach Anspruch 1, ferner umfassend:
Einführen von Wasserdampf direkt in die Mischeinheit (10).

3. Batterieherstellungsverfahren nach einem der vorhergehenden Ansprüche, ferner umfassend:
Bestimmen von Feuchtigkeit und/oder Temperatur des Trocknungsmittels.

4. Batterieherstellungsverfahren nach einem der vorhergehenden Ansprüche, ferner umfassend:
Bestimmen von Feuchtigkeit und/oder Temperatur des externen Gases vor dem Hinzufügen zu dem Trocknungsmittel in der Mischeinheit (10).

5. Batterieherstellungsverfahren nach einem der vorhergehenden Ansprüche, wobei ein Zufluss (E) des externen Gases als eine Funktion von mindestens einem der Folgenden gesteuert wird:
der Feuchtigkeit des Trocknungsmittels;
der Temperatur des Trocknungsmittels;
der Feuchtigkeit des externen Gases; und
der Temperatur des externen Gases.

6. Batterieherstellungsverfahren nach einem der vorhergehenden Ansprüche, ferner umfassend:
Erwärmen des Trocknungsmittels, das von der Mischeinheit (10) zu der Trocknungseinheit (20) fließt.

7. Batterieherstellungssystem, das konfiguriert ist, um das Verfahren nach einem der Ansprüche 1 bis 6 durchzuführen, wobei das Batterieherstellungssystem umfasst:
eine Trocknungseinheit (20), die konfiguriert ist, um ein Batterieteil (P) aufzunehmen;
eine Mischeinheit (10), die konfiguriert ist, um ein Trocknungsmittel zu konditionieren;
ein Anschlusssystem (40), das konfiguriert ist, um zu ermöglichen, insbesondere zu steuern, dass ein externes Gas zu dem Trocknungsmittel hinzugefügt wird, um das Trocknungsmittel zu konditionieren; und
einen Strömungsgenerator (30), der konfiguriert ist, um das Trocknungsmittel von der Mischeinheit (10) zu der Trocknungseinheit (20) zum Trocknen des Batterieteils (P) zu bewegen,
**dadurch gekennzeichnet, dass**
der Strömungsgenerator (30) ferner konfiguriert ist, um das Trocknungsmittel in einem Zyklus von der Trocknungseinheit (20) zu der Mischeinheit (10) umzuleiten.

8. Batterieherstellungssystem nach Anspruch 7, ferner umfassend:
einen Befeuchter (8), der konfiguriert ist, um Wasserdampf direkt in die Mischeinheit (10) einzuführen.

9. Batterieherstellungssystem nach Anspruch 7 oder 8, ferner umfassend:
eine Erfassungsvorrichtung (80), die konfiguriert ist, um mindestens eines der Folgenden zu bestimmen:
- Feuchtigkeit des Trocknungsmittels;
- Temperatur des Trocknungsmittels;
- Feuchtigkeit des externen Gases; und
- Temperatur des externen Gases.

10. Batterieherstellungssystem nach Anspruch 9,
wobei das Anschlusssystem (40) durch die Mischeinheit (10) betreibbar ist, um einen Zufluss (E) des externen Gases als eine Funktion von mindestens einem der Folgenden zu steuern:
Feuchtigkeit des Trocknungsmittels;
Temperatur des Trocknungsmittels;
Feuchtigkeit des externen Gases; und
Temperatur des externen Gases.

11. Batterieherstellungssystem nach einem der Ansprüche 7 bis 10, ferner umfassend:
eine Heizvorrichtung (50), die konfiguriert ist, um das Trocknungsmittel, das von der Mischeinheit (10) zu der Trocknungseinheit (20) fließt, zu erwärmen.

## Revendications

1. Procédé de fabrication de batterie consistant à :
fournir une partie batterie (P) dans une unité de séchage (20) ;
fournir un agent de séchage dans une unité de mélange (10) ;
réguler, par l'unité de mélange (10), l'humidité et/ou la température de l'agent de séchage en ajoutant un gaz externe à l'agent de séchage dans l'unité de mélange (10) ;
envoyer l'agent de séchage de l'unité de mélange (10) à l'unité de séchage (20) ; et
le procédé étant **caractérisé par** le fait de :
rediriger l'agent de séchage de l'unité de séchage (20) vers l'unité de mélange (10) pour établir la circulation de l'agent de séchage.

2. Procédé de fabrication de batterie selon la revendication 1, consistant en outre à :
introduire de la vapeur d'eau directement dans l'unité de mélange (10).

3. Procédé de fabrication de batterie selon l'une quelconque des revendications précédentes, consistant en outre à :
déterminer l'humidité et/ou la température de l'agent de séchage.

4. Procédé de fabrication de batterie selon l'une quelconque des revendications précédentes, consistant en outre à :
déterminer l'humidité et/ou la température du gaz externe avant de l'ajouter à l'agent de séchage dans l'unité de mélange (10).

5. Procédé de fabrication de batterie selon l'une quelconque des revendications précédentes, dans lequel un flux entrant (E) du gaz externe est régulé en fonction d'au moins un des éléments suivants :
l'humidité de l'agent de séchage ;
la température de l'agent de séchage ;
l'humidité du gaz externe ; et
la température du gaz externe.

6. Procédé de fabrication de batterie selon l'une quelconque des revendications précédentes, consistant en outre à :
chauffer l'agent de séchage s'écoulant de l'unité de mélange (10) vers l'unité de séchage (20).

7. Système de fabrication de batterie, qui est configuré pour effectuer le procédé selon l'une quelconque des revendications 1 à 6, le système de fabrication de batterie comprenant :
une unité de séchage (20) configurée pour recevoir une partie batterie (P) ;
une unité de mélange (10) configurée pour conditionner un agent de séchage ;
un système d'orifice (40) configuré pour permettre, en particulier pour réguler, un gaz externe à ajouter à l'agent de séchage afin de conditionner l'agent de séchage ; et
un générateur d'écoulement (30) configuré pour déplacer l'agent de séchage de l'unité de mélange (10) vers l'unité de séchage (20) pour sécher la partie batterie (P),
**caractérisé en ce que**
le générateur d'écoulement (30) est configuré en outre pour rediriger l'agent de séchage de l'unité de séchage (20) vers l'unité de mélange (10) en un cycle.

8. Système de fabrication de batterie selon la revendication 7, comprenant en outre :
un humidificateur (8) configuré pour introduire de la vapeur d'eau directement dans l'unité de mélange (10).

9. Système de fabrication de batterie selon la revendication 7 ou 8, comprenant en outre :
un dispositif de détection (80) configuré pour déterminer au moins un des éléments suivants :
- l'humidité de l'agent de séchage ;
- la température de l'agent de séchage ;
- l'humidité du gaz externe ; et
- la température du gaz externe.

10. Système de fabrication de batterie selon la revendication 9,
dans lequel le système d'orifice (40) peut être actionné par l'unité de mélange (10) pour réguler un flux entrant (E) du gaz externe en fonction d'au moins un des éléments suivants :
l'humidité de l'agent de séchage ;
la température de l'agent de séchage ;
l'humidité du gaz externe ; et
la température du gaz externe

11. Système de fabrication de batterie selon l'une quelconque des revendications 7 à 10, comprenant en outre :
un dispositif de chauffage (50) configuré pour chauffer l'agent de séchage s'écoulant de l'unité de mélange (10) vers l'unité de séchage (20).
